# EUROPEAN PATENT APPLICATION

(11) **EP 4 418 586 A1**
(43) Date of publication of application: **21.08.2024**
(21) Application number: 21960232.3
(22) Date of filing: 13.10.2021
(51) Int. Cl.: H04L 5/00

(54) **METHOD AND APPARATUS FOR REPORTING MULTI-CARRIER AGGREGATION CAPABILITY**

(71) Applicant: Beijing Xiaomi Mobile Software Co., Ltd., Beijing Beijing 100085 (CN)
(72) Inventor: GUO, Shengxiang, Beijing 100085 (CN); WU, Yumin, Beijing 100085 (CN)
(74) Representative: Stöckeler, Ferdinand
(86) International application number: PCT/CN2021/123640
(87) International publication number: WO 2023/060491

(57) **Abstract**

Disclosed in embodiments of the present application are a method and apparatus for reporting a multi-carrier aggregation capability, which can be applied to a communication system such as a long-term evolution (LTE) system, a 5th generation (5G) mobile communication system, a 5G new radio (NR) system, or other future novel mobile communication systems. The method comprises: reporting, by means of first signaling, an aggregation bandwidth class or aggregation capability information supported by a terminal device to a network side device, and reporting, by means of second signaling, an aggregation bandwidth class supported by the terminal device to the network side device, wherein the aggregation bandwidth class reported by means of the second signaling is a fallback aggregation bandwidth class of the aggregation bandwidth class reported by means of the first signaling. By means of the embodiments of the present application, the aggregation bandwidth classes supported by the terminal device can be reported according to the first signaling and the second signaling. By means of the mode, the situation that the network side device cannot be compatible with the aggregation bandwidth class comprised in the first signaling can be avoided, such that avoidance of resource waste can be facilitated.

## Description

### TECHNICAL FIELD

The disclosure relates to the field of communication technologies, in particular to a method for reporting a multi-carrier aggregation capability and an apparatus for reporting a multi-carrier aggregation capability.

### BACKGROUND

With the development of mobile communication technology, in order to meet higher speed requirements, high frequency, large bandwidth, large-scale antenna technology and multi-carrier aggregation have increasingly become the development trend of wireless communication technology.

The multi-carrier aggregation technology is also widely used in the fifth-generation communication system, which is mainly divided into contiguous carrier aggregation within a frequency band, non-contiguous carrier aggregation within a frequency band, and carrier aggregation between frequency bands. For contiguous carrier aggregation within a frequency band, RAN4 defines the aggregation bandwidth level of contiguous carrier aggregation. In order to meet different application scenarios and different terminal capabilities, RAN4 further defines different fallback groups.

### SUMMARY

Embodiments of the present application provide a method and an apparatus for reporting a multi-carrier aggregation capability, which can be applied to long term evolution (long term evolution, LTE) systems, fifth generation (5th generation, 5G) mobile communication systems, 5G new air interface (new radio, NR) system, or other communication systems such as other future new mobile communication systems, by implementing the embodiment of the present application, the aggregated bandwidth level supported by the terminal device can be reported according to the first signaling and the second signaling. In this manner, it can be avoided that the network side device cannot be compatible with the aggregated bandwidth level included in the first signaling, thereby helping to avoid waste of resources.

According to a first aspect, an embodiment of the present disclosure provides a method for reporting a multi-carrier aggregation capability, which is performed by a terminal device. The method includes:

reporting an aggregation bandwidth class or aggregation capability information supported by the terminal device to a network side device through a first signaling, and reporting the aggregation bandwidth class supported by the terminal device to the network side device through a second signaling; in which the aggregation bandwidth class reported through the second signaling is a fallback aggregation bandwidth class of the aggregation bandwidth class reported through the first signaling.

Optionally, the aggregation bandwidth class reported through the first signaling and the aggregation bandwidth class reported through the second signaling belong to a same fallback group; or
the aggregation bandwidth class reported through the second signaling and the aggregation bandwidth class reported through the first signaling are located in different fallback groups; or
a fallback group to which the aggregation bandwidth class reported through the second signaling belongs is a subgroup of a fallback group to which the aggregation bandwidth class reported through the first signaling belongs.

Optionally, the aggregation capability information is used to respectively report an aggregation state in an uplink frequency band and an aggregation state in a downlink frequency band supported by the terminal device, or report an aggregation state in a frequency band.

Optionally, the aggregation state comprises at least one of:
contiguous;
non-contiguous; or
contiguous and non-contiguous.

Optionally, the first signaling is a new radio (NR) carrier aggregation bandwidth class CA-BandwidthClassNR-v17xy signaling, where xy is a serial number.

Optionally, the first signaling comprises at least one of: an NR downlink carrier aggregation bandwidth class CA-BandwidthClassDL-NR-v17xy signaling, an NR uplink carrier aggregation bandwidth class CA-BandwidthClassUL-NR-v17xy signaling, a frequency band parameter BandParameters-v17xy signaling, a frequency band list BandList-v17xy signaling, a frequency band combination BandCombination-v17xy signaling, a frequency band combination list BandCombinationList-v17xy signaling, or a supported frequency band combination list SupportedBandCombinationList-v17xy signaling.

Optionally, the CA-BandwidthClassNR-v17xy signaling, the CA-BandwidthClassDL-NR-v17xy signaling, the CA-BandwidthClassUL-NR-v17xy signaling, the BandParameters-v17xy signaling, the BandList-v17xy signaling, the BandCombination-v17xy signaling, the BandCombinationList-v17xy signaling, and the SupportedBandCombinationList-v17xy signaling have a same identifier.

Optionally, the first signaling further comprises: an NR downlink carrier aggregation bandwidth class CA-BandwidthClassDL1-NR-v17xy signaling and an NR downlink carrier aggregation bandwidth class CA-BandwidthClassDL2-NR-v17xy signaling, or an NR uplink carrier aggregation bandwidth class CA-BandwidthClassUL1-NR-v17xy signaling and an NR uplink carrier aggregation bandwidth class CA-BandwidthClassUL2-NR-v17xy signaling.

Optionally, the first signaling further comprises at least one of: a frequency band parameter BandParameters-v17xy signaling, a frequency band list BandList-v17xy signaling, a frequency band combination BandCombination-v17xy signaling, a frequency band combination list BandCombinationList-v17xy signaling, or a supported frequency band combination list supportedBandCombinationList-v17xy signaling.

Optionally, the NR downlink carrier aggregation bandwidth class CA-BandwidthClassDL1-NR-v17xy signaling, the NR downlink carrier aggregation bandwidth class CA-BandwidthClassDL2-NR-v17xy signaling, and the NR uplink carrier aggregation bandwidth class CA-BandwidthClassUL1-NR-v17xy signaling, the NR uplink carrier aggregation bandwidth class CA-BandwidthClassUL2-NR-v17xy signaling, the frequency band parameter BandParameters-v17xy signaling, the frequency band list BandList-v17xy signaling, the frequency band combination BandCombination-v17xy Signaling, the frequency band combination list BandCombinationList-v17xy signaling, the supported frequency band combination list supportedBandCombinationList-v17xy signaling have a same identifier.

Optionally, the aggregation bandwidth class reported through the first signaling is one or more of extended aggregation bandwidth classes R, S, T, U, MA, MD, ME, and MF.

Optionally, when the aggregation bandwidth class reported through the first signaling is one or more of R, S, T and U, the aggregation bandwidth class reported through the second signaling is F.

Optionally, when the aggregation bandwidth class reported through the first signaling is one or more of MA, MD, ME and MF, the aggregation bandwidth class reported through the second signaling is one of M, F, E, D, or A.

Optionally, the first signaling comprises: a supported intra-band carrier aggregation Intra-bandCA-support-v17xy signaling, and the Intra-bandCA-support-v 17xy signaling is used to indicate the aggregation state in the uplink frequency band and the aggregation state in the downlink frequency band supported by the terminal device.

Optionally, the first signaling comprises: a combination of a supported intra-band uplink carrier aggregation Intra-bandCAUL-support-v17xy signaling and a supported intra-band downlink carrier aggregation Intra-bandCADL-support-v17xy signaling, wherein the Intra-bandCAUL-support-v17xy signaling and the Intra-bandCADL-support-v17xy signaling are respectively used to indicate an uplink carrier aggregation state and a downlink carrier aggregation state.

Optionally, the first signaling further comprises at least one of: a frequency band parameter BandParameters-v17xy signaling, a frequency band list BandList-v17xy signaling, a frequency band combination BandCombination-v17xy signaling, a frequency band combination list BandCombinationList-v17xy signaling, or a supported frequency band combination list SupportedBandCombinationList-v17xy signaling.

Optionally, the supported intra-band carrier aggregation Intra-bandCA-support signaling, the frequency band parameter BandParameters-v17xy signaling, the frequency band list BandList-v17xy signaling, and the frequency band combination BandCombination-v17xy signaling, the frequency band combination list BandCombinationList-v17xy signaling, and the supported frequency band combination list SupportedBandCombinationList-v17xy signaling have a same identifier.

Optionally, the supported intra-band uplink carrier aggregation Intra-bandCAUL-support signaling, the supported intra-band downlink carrier aggregation Intra-bandCADL-support signaling, and the frequency band parameter BandParameters-v17xy signaling, the frequency band list BandList-v17xy signaling, the frequency band combination BandCombination-v17xy signaling, the frequency band combination list BandCombinationList-v17xy signaling, and the supported frequency band combination list SupportedBandCombinationList-v17xy have a same identifier.

According to a second aspect, an embodiment of the present disclosure provides a method for acquiring a multi-carrier aggregation capability, which is performed by a network side device, and the method includes:
receiving a first signaling and a second signaling sent by a terminal device; in which the first signaling is configured to indicate an aggregation bandwidth class or aggregation capability information supported by the terminal device, and the second signaling is configured to indicate the aggregation bandwidth class supported by the terminal device, in which the aggregation bandwidth class reported through the second signaling is a fallback aggregation bandwidth class of the aggregation bandwidth class reported through the first signaling.

Optionally, the aggregation bandwidth class reported through the first signaling and the aggregation bandwidth class reported through the second signaling belong to a same fallback group; or
the aggregation bandwidth class reported through the second signaling and the aggregation bandwidth class reported through the first signaling are located in different fallback groups; or
a fallback group to which the aggregation bandwidth class reported through the second signaling belongs is a subgroup of a fallback group to which the aggregation bandwidth class reported through the first signaling belongs.

Optionally, the method comprises: analyzing the first signaling, and determining the aggregation bandwidth class supported by the terminal device based on an analysis result.

Optionally, determining the aggregation bandwidth class supported by the terminal device based on the analysis result comprises at least one of:
in response to being able to analyze the first signaling, determining the aggregation bandwidth class or the aggregation capability information supported by the terminal device based on the first signaling, and determining the aggregation bandwidth class supported by the terminal device based on the aggregation bandwidth class supported by the terminal device in the first signaling or determining the aggregation bandwidth class supported by the terminal device based on the aggregation capability information in the first signaling; or
in response to failing to analyze the first signaling, determining the aggregation bandwidth class supported by the terminal device based on the second signaling.

Optionally, the method comprises at least one of:
in response to being able to analyze the first signaling, ignoring the second signaling; or
in response to failing to analyze the first signaling, ignoring the first signaling.

Optionally, the aggregation capability information is used to respectively obtain an aggregation state in an uplink frequency band and an aggregation state in a downlink frequency band supported by the terminal device, or obtain an aggregation state in a frequency band.

Optionally, the aggregation state comprises at least one of:
contiguous;
non-contiguous; or
contiguous and non-contiguous.

Optionally, the first signaling is a new radio (NR) carrier aggregation bandwidth class CA-BandwidthClassNR-v17xy signaling, where xy is a serial number.

Optionally, the first signaling comprises at least one of: an NR downlink carrier aggregation bandwidth class CA-BandwidthClassDL-NR-v17xy signaling, an NR uplink carrier aggregation bandwidth class CA-BandwidthClassUL-NR-v17xy signaling, a frequency band parameter BandParameters-v17xy signaling, a frequency band list BandList-v17xy signaling, a frequency band combination BandCombination-v17xy signaling, a frequency band combination list BandCombinationList-v17xy signaling, or a supported frequency band combination list SupportedBandCombinationList-v17xy signaling.

Optionally, the CA-BandwidthClassNR-v17xy signaling, the CA-BandwidthClassDL-NR-v17xy signaling, the CA-BandwidthClassUL-NR-v17xy signaling, the BandParameters-v17xy signaling, the BandList-v17xy signaling, the BandCombination-v17xy signaling, the BandCombinationList-v17xy signaling, and the SupportedBandCombinationList-v17xy signaling have a same identifier.

Optionally, the first signaling further comprises: an NR downlink carrier aggregation bandwidth class CA-BandwidthClassDL1-NR-v17xy signaling and an NR downlink carrier aggregation bandwidth class CA-BandwidthClassDL2-NR-v17xy signaling, or an NR uplink carrier aggregation bandwidth class CA-BandwidthClassUL1-NR-v17xy signaling and an NR uplink carrier aggregation bandwidth class CA-BandwidthClassUL2-NR-v17xy signaling.

Optionally, the first signaling further comprises at least one of: a frequency band parameter BandParameters-v17xy signaling, a frequency band list BandList-v17xy signaling, a frequency band combination BandCombination-v17xy signaling, a frequency band combination list BandCombinationList-v17xy signaling, or a supported frequency band combination list supportedBandCombinationList-v17xy signaling.

Optionally, the NR downlink carrier aggregation bandwidth class CA-BandwidthClassDL1-NR-v17xy signaling, the NR downlink carrier aggregation bandwidth class CA-BandwidthClassDL2-NR-v17xy signaling, and the NR uplink carrier aggregation bandwidth class CA-BandwidthClassUL1-NR-v17xy signaling, the NR uplink carrier aggregation bandwidth class CA-BandwidthClassUL2-NR-v17xy signaling, the frequency band parameter BandParameters-v17xy signaling, the frequency band list BandList-v17xy signaling, the frequency band combination BandCombination-v17xy Signaling, the frequency band combination list BandCombinationList-v17xy signaling, the supported frequency band combination list supportedBandCombinationList-v17xy signaling have a same identifier.

Optionally, the aggregation bandwidth class obtained based on the first signaling is one or more of extended aggregation bandwidth classes R, S, T, U, MA, MD, ME, and MF.

Optionally, when the aggregation bandwidth class obtained based on the first signaling is one or more of R, S, T and U, the aggregation bandwidth class obtained based on the second signaling is F.

Optionally, when the aggregation bandwidth class obtained based on the first signaling is one or more of MA, MD, ME and MF, the aggregation bandwidth class obtained based on the second signaling is one of M, F, E, D, or A.

Optionally, the first signaling comprises: a supported intra-band carrier aggregation Intra-bandCA-support-v17xy signaling, and the Intra-bandCA-support-v 17xy signaling is used to indicate the aggregation state in the uplink frequency band and the aggregation state in the downlink frequency band supported by the terminal device.

Optionally, the first signaling comprises: a combination of a supported intra-band uplink carrier aggregation Intra-bandCAUL-support-v17xy signaling and a supported intra-band downlink carrier aggregation Intra-bandCADL-support-v17xy signaling, wherein the Intra-bandCAUL-support-v17xy signaling and the Intra-bandCADL-support-v17xy signaling are respectively used to indicate an uplink carrier aggregation state and a downlink carrier aggregation state.

Optionally, the first signaling further comprises at least one of: a frequency band parameter BandParameters-v17xy signaling, a frequency band list BandList-v17xy signaling, a frequency band combination BandCombination-v17xy signaling, a frequency band combination list BandCombinationList-v17xy signaling, or a supported frequency band combination list SupportedBandCombinationList-v17xy signaling.

Optionally, the supported intra-band carrier aggregation Intra-bandCA-support signaling, the frequency band parameter BandParameters-v17xy signaling, the frequency band list BandList-v17xy signaling, and the frequency band combination BandCombination-v17xy signaling, the frequency band combination list BandCombinationList-v17xy signaling, and the supported frequency band combination list SupportedBandCombinationList-v17xy signaling have a same identifier.

Optionally, the supported intra-band uplink carrier aggregation Intra-bandCAUL-support signaling, the supported intra-band downlink carrier aggregation Intra-bandCADL-support signaling, and the frequency band parameter BandParameters-v17xy signaling, the frequency band list BandList-v17xy signaling, the frequency band combination BandCombination-v17xy signaling, the frequency band combination list BandCombinationList-v17xy signaling, and the supported frequency band combination list SupportedBandCombinationList-v17xy have a same identifier.

According to a third aspect, an embodiment of the present disclosure provides a communication apparatus. The communication apparatus has some or all functions of the terminal device which implements the method described in the first aspect. For example, the communication apparatus may have the function of some or all embodiments of the disclosure, or may have the function of independently implementing any embodiment of the disclosure. The function can be implemented by hardware, or can be implemented by executing corresponding software using the hardware. The hardware or software includes one or more units or modules corresponding to the above functions.

In an implementation, the communication apparatus may include a transceiver module and a processing module, and the processing module is configured to support the communication apparatus in performing a corresponding function in the foregoing method. The transceiver module is configured to support communications between the communication apparatus and another device. The communication apparatus may further include a storage module, the storage module is configured to be coupled to the transceiver module and the processing module, and store necessary computer programs and data of the communication apparatus.

As an example, the processing module may be a processor, the transceiver module may be a transceiver or a communication interface, and the storage module may be a memory. In an implementation, the communication apparatus includes:
a reporting module, configured to report an aggregation bandwidth class or aggregation capability information supported by the terminal device to a network side device through a first signaling, and report the aggregation bandwidth class supported by the terminal device to the network side device through a second signaling; wherein the aggregation bandwidth class reported through the second signaling is a fallback aggregation bandwidth class of the aggregation bandwidth class reported through the first signaling.

According to a fourth aspect, an embodiment of the present disclosure provides a communication apparatus, the communications apparatus has some or all functions of the network device in the method examples described in the second aspect. For example, the communication apparatus may have the function in some or all embodiments of the disclosure, or may have the function of independently implementing any embodiment of the disclosure. The function may be implemented by the hardware, or may be implemented by executing corresponding software using the hardware. The hardware or software includes one or more units or modules corresponding to the foregoing functions.

In an implementation, the communication apparatus may include a transceiver module and a processing module, and the processing module is configured to support the communication apparatus in performing a corresponding function in the foregoing method. The transceiver module is configured to support communications between the communication apparatus and another device. The communication apparatus may further include a storage module, the storage module is configured to be coupled to the transceiver module and the processing module, and store necessary computer programs and data of the communication apparatus.

As an example, the processing module may be a processor, the transceiver module may be a transceiver or a communication interface, and the storage module may be a memory. In an implementation, the communication apparatus includes:
a receiving module, configured to receive a first signaling and a second signaling sent by a terminal device; wherein the first signaling is configured to indicate an aggregation bandwidth class or aggregation capability information supported by the terminal device, and the second signaling is configured to indicate the aggregation bandwidth class supported by the terminal device, wherein the aggregation bandwidth class reported through the second signaling is a fallback aggregation bandwidth class of the aggregation bandwidth class reported through the first signaling.

According to a fifth aspect, an embodiment of the present disclosure provides a communication apparatus, the communication apparatus includes a processor, when the processor calls a computer program stored in a memory, the method according to the first aspect is implemented.

According to a sixth aspect, an embodiment of the present disclosure provides a communication apparatus, the communication apparatus includes a processor, when the processor calls a computer program stored in a memory, the method according to the second aspect is implemented.

According to a seventh aspect, an embodiment of the present disclosure provides a communication apparatus, the communication apparatus includes a processor and a memory, the memory stores a computer program, and the processor executes the computer program stored in the memory, to cause the communication apparatus to execute the method according to the first aspect.

According to an eighth aspect, an embodiment of the present disclosure provides a communication apparatus, the communication apparatus includes a processor and a memory, the memory stores a computer program, and the processor executes the computer program stored in the memory, to causes the communication apparatus to execute the method according to the second aspect.

According to a ninth aspect, an embodiment of the present disclosure provides a communication apparatus, the communication apparatus includes a processor and an interface circuit; the interface circuit is configured to receive code instructions and transmit the code instructions to the processor; and the processor is configured to run the code instructions to execute the method according to the first aspect.

According to a tenth aspect, an embodiment of the present disclosure provides a communication apparatus, the communication apparatus includes a processor and an interface circuit; the interface circuit is configured to receive code instructions and transmit the code instructions to the processor; and the processor is configured to run the code instructions to execute the method according to the second aspect.

According to an eleventh aspect, an embodiment of the present disclosure provides a system for reporting a multi-carrier aggregation capability, the system includes the communication apparatus according to the third aspect and the communication apparatus according to the fourth aspect, or the system includes the communication apparatus according to the fifth aspect and the communication apparatus according to the sixth aspect, or the system includes the communication apparatus according to the seventh aspect and the communication apparatus according to the eighth aspect, or the system includes the communication apparatus according to the ninth aspect and the communication apparatus according to the tenth aspect.

According to a twelfth aspect, an embodiment of the present disclosure provides a computer-readable storage medium, configured to store instructions used by the terminal device, and when the instructions is executed, the terminal device is caused to perform the method according to the first aspect.

According to a thirteenth aspect, an embodiment of the present invention provides a readable storage medium, configured to store instructions used by the network device, and when the instructions are executed, the network device is caused to perform the method according to the second aspect.

According to a fourteenth aspect, the present disclosure further provides a computer program product including a computer program, and when the computer program product runs on a computer, the computer is caused to perform the method according to the first aspect.

According to a fifteenth aspect, the present disclosure further provides a computer program product including a computer program, and when the computer program product runs on a computer, the computer is caused to perform the method according to the second aspect.

According to a sixteenth aspect, the present disclosure provides a chip system. The chip system includes at least one processor and an interface, for supporting the terminal device in realizing the functions involved in the first aspect, e.g., at least one of determining or processing data and information involved in the method described above. In a possible design, the chip system further includes a memory, which is configured to store computer programs and data necessary for the terminal device. The chip system may consist of chips or may include chips and other discrete devices.

According to a seventeenth aspect, the present disclosure provides a chip system. The chip system includes at least one processor and an interface, for supporting the terminal device in realizing the functions involved in the second aspect, e.g., at least one of determining or processing data and information involved in the method described above. In a possible design, the chip system further includes a memory, which is configured to store computer programs and data necessary for the terminal device. The chip system may consist of chips or may include chips and other discrete devices.

According to an eighteenth aspect, the present disclosure provides a computer program. When the computer program runs on a computer, the computer is caused to implement the method of the first aspect.

According to a nineteenth aspect, the present disclosure provides a computer program. When the computer program runs on a computer, the computer is caused to implement the method of the second aspect.

### BRIEF DESCRIPTION OF THE DRAWINGS

In order to clearly illustrate technical solutions of embodiments of the disclosure or background technologies, the accompanying drawings used in the embodiments or the background technologies will be explained below.
FIG. 1 is a block diagram of a communication system according to an embodiment of the disclosure.
FIG. 2 is a flowchart of a method for reporting a multi-carrier aggregation capability according to an embodiment of the disclosure.
FIG. 3 is a flowchart of a method for reporting a multi-carrier aggregation capability according to an embodiment of the disclosure.
FIG. 4 is a block diagram of a terminal device according to an embodiment of the disclosure.
FIG. 5 is a block diagram of a network device according to an embodiment of the disclosure.
FIG. 6 is a block diagram of a communication apparatus according to an embodiment of the disclosure.
FIG. 7 is a block diagram of another communication apparatus according to an embodiment of the disclosure.
FIG. 8 is a block diagram of a chip according to an embodiment of the disclosure.

### DETAILED DESCRIPTION

For ease of understanding, terms involved in the present disclosure are firstly introduced.

### 1. Carrier Aggregation (CA)

Carrier aggregation is a technology to increase a transmission bandwidth. Multiple carriers of different frequencies (or the same frequency) are aggregated into a wider spectrum, at the same time, some non-contiguous spectrum fragments can also be aggregated together to achieve an effect of increasing the bandwidth. For example, a carrier bandwidth of 100MHz can only be one carrier. In order to pursue a higher transmission rate, the carrier aggregation technology can be used to establish a connection between multiple carriers and a user equipment (UE) to provide data transmission. For example, two carriers with a bandwidth of 100MHz are aggregated. After aggregation, a total bandwidth of 200MHz can be obtained. Compared with a single carrier of 100MHz, a speed of data transmission is directly doubled, which improves the usage and transmission rate.

In order to better understand a method for reporting a multi-carrier aggregation capability disclosed in the embodiment of the present disclosure, a communication system to which the embodiments of the present disclosure are applicable is firstly described below.

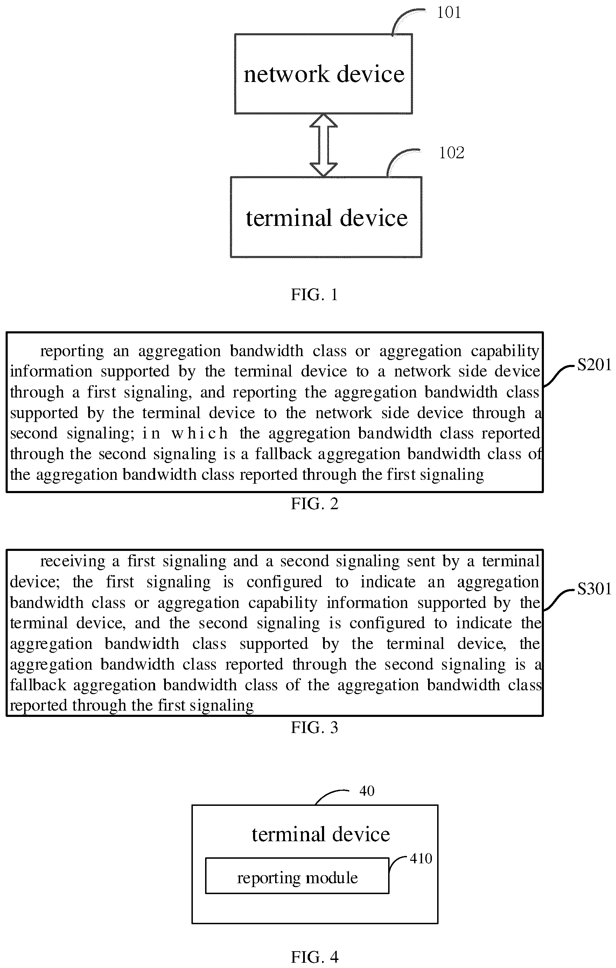

Referring to FIG. 1, FIG. 1 is a block diagram of a communication system according to an embodiment of the present disclosure. The communication system may include, but is not limited to, a network device and a terminal device. The number and form of devices shown in FIG. 1 are merely used for example and do not constitute a limitation on the embodiments of the present disclosure, and the communication system may include two or more network devices, and two or more terminal devices in practical applications. The communication system shown in FIG. 1 includes, for example, one network device 101 and one terminal device 102.

It should be noted that the technical solutions of the embodiments of the disclosure can be used in various communication systems, such as, a long term evolution (LTE) system, a 5th generation (5G) mobile communication system, a 5G new radio (NR) system, or other future new mobile communication systems. Further, it should be noted that the sidelink in the embodiments of the disclosure can also referred to as sidelink or direct link.

The network device 101 in the embodiments of the present disclosure is an entity used to send or receive signals on a network side. For example, the network device 101 may be an evolved NodeB (eNB), a transmission reception point (TRP), a next generation NodeB (gNB) in an NR system, a base station in a future mobile communication system or an access node in a wireless fidelity (WiFi) system, and the like. Specific technologies and specific device forms used by the network device are not limited in the embodiments of the present disclosure. The network device provided in the embodiments of the present disclosure may be composed of a central unit (CU) and a distributed unit (DU). The CU may also be referred to as a control unit. The CU-DU structure may split a protocol layer of the network device, for example, a protocol layer of the base station, some functions of the protocol layer are placed in the CU for centralized control, and some or all of the remaining functions of the protocol layer are distributed in the DU, which is intensively controlled by the CU.

The terminal device 102 in the embodiments of the present disclosure is an entity used to receive or send signals on a user side, for example, a mobile phone. The terminal device may also be referred to as a terminal, a user equipment (UE), a mobile station (MS), a mobile terminal (MT), or the like. The terminal device may be an automobile with a communication function, an intelligent automobile, a mobile phone, a wearable device, a pad, a computer with a wireless transceiver function, a virtual reality (VR) terminal device, an augmented reality (AR) terminal device, a wireless terminal device in the industrial control, a wireless terminal device in the self-driving, a wireless terminal device in the remote medical surgery, a wireless terminal device in the smart grid, a wireless terminal device in the transportation safety, a wireless terminal device in the smart city, a wireless terminal device in the smart home, etc. Specific technologies and specific device forms used by the terminal device are not limited in the embodiments of the present disclosure.

With the development of mobile communication technologies, in order to meet a higher speed requirement, high frequency, large bandwidth, large-scale antenna technology and multi-carrier aggregation have increasingly become the development trend of the wireless communication technology.

The multi-carrier aggregation technology is also widely used in the fifth-generation communication system, which is mainly classified into contiguous carrier aggregation within a frequency band, non-contiguous carrier aggregation within a frequency band, and carrier aggregation between frequency bands. For the contiguous carrier aggregation within a frequency band, RAN4 defines an aggregation bandwidth class of the contiguous carrier aggregation. In order to meet different application scenarios and different terminal capabilities, RAN4 further defines different fallback groups (FBGs).

The network side may configure a number (for example, 8) of carriers supporting CA for all terminal devices by default. However, some terminal devices cannot support the aggregation of so many carriers due to limitation of their own terminal capabilities, so the terminal device needs to select the number of carriers supporting other CAs, and can obtain the number of carriers supporting other CAs according to the fallback group.

**Table 1**

| **NR CA bandwidth class** | **Aggregated channel bandwidth** | **Number of contiguous CC** | **Fallback group** |
|---|---|---|---|
| A | BW_{Channel} ≤ 400 MHz | 1 | 1,2,3,4 |
| B | 400 MHz < BW_{Channel_CA} ≤ 800 MHz | 2 | 1 |
| C | 800 MHz < BW_{Channel_CA} ≤ 1200 MHz | 3 | |
| D | 200 MHz < BW_{Channel_CA} ≤ 400 MHz | 2 | 2 |
| E | 400 MHz < BW_{Channel_CA} ≤ 600 MHz | 3 | |
| F | 600 MHz < BW_{Channel_CA} ≤ 800 MHz | 4 | |
| G | 100 MHz < BW_{Channel_CA} ≤ 200 MHz | 2 | 3 |
| H | 200 MHz < BW_{Channel_CA} ≤ 300 MHz | 3 | |
| I | 300 MHz < BW_{Channel_CA} ≤ 400 MHz | 4 | |
| J | 400 MHz < BW_{Channel_CA} ≤ 500 MHz | 5 | |
| K | 500 MHz < BW_{Channel_CA} ≤ 600 MHz | 6 | |
| L | 600 MHz < BW_{Channel_CA} ≤ 700 MHz | 7 | |
| M | 700 MHz < BW_{Channel_CA} ≤ 800 MHz | 8 | |
| O | 100 MHz ≤ BW_{Channel_CA} ≤ 200 MHz | 2 | 4 |
| P | 150 MHz ≤ BW_{Channel_CA} ≤ 300 MHz | 3 | |
| Q | 200 MHz ≤ BW_{Channel_CA} ≤ 400 MHz | 4 | |

Table 1 shows the aggregation bandwidth class and the corresponding fallback group defined for millimeter wave FR2 contiguous carrier aggregation. The bandwidth aggregation class (NR CA bandwidth class) is based on a range of the supported total bandwidth after carrier aggregation. Some bandwidth aggregation class codes (A, B, C, D, E, F, G, H, I, J, K, L, M, O, P, Q) are defined in Table 1. The NR CA bandwidth class has a one-to-one correspondence with the total bandwidth range (Aggregated channel bandwidth) after carrier aggregation performed according to the NR CA bandwidth class. Number of contiguous CC refers to the number of carriers used to implement the Aggregated channel bandwidth. Since the bandwidth of each carrier may be different, the same total bandwidth may correspond to different numbers of carriers. Fallback group (FBG) is a fallback group corresponding to the NR CA bandwidth class. A definition of the FR2 fallback group is defined based on the supported maximum channel bandwidth and only one carrier bandwidth in each aggregation class is smaller than the supported maximum channel bandwidth. For example, the bandwidth aggregation class of FBG 1 is defined for the maximum channel bandwidth supported by a single carrier that is 400MHz, the bandwidth aggregation class of FBG 2 is defined for the maximum channel bandwidth supported by a single carrier that is 200MHz, the bandwidth aggregation class of FBG 3 is defined for the maximum channel bandwidth supported by a single carrier that is 100MHz. The fallback group corresponding to the NR CA bandwidth class A can be FBG 1, FBG 2, FBG 3, or FBG 4, which is different from the fallback groups corresponding to other NR CA bandwidth classes.

The aggregation bandwidth class of the above-mentioned FR2 contiguous carrier aggregation only requires that the terminal must be able to fall back to a lower-order aggregation bandwidth class in the same fallback group, and it is not mandatory to fall back between different fallback groups.

**Table 2**

| **NR CA bandwidth class** | **Aggregated channel bandwidth** | **Number of contiguous CC** | **Fallback group** |
|---|---|---|---|
| R | 800 MHz < BW_{Channel_CA} ≤ 1000 MHz | 5 | 2 |
| S | 1000 MHz < BW_{Channel_CA} ≤ 1200 MHz | 6 | |
| T | 1200 MHz < BW_{Channel_CA} ≤ 1400 MHz | 7 | |
| U | 1400 MHz < BW_{Channel_CA} ≤ 1600 MHz | 8 | |

As shown in Table 2, with the continuous enhancement of terminal capabilities, operators propose to add greater aggregation bandwidth classes, for example adding the aggregation bandwidth classes R, S, T, U respectively having the maximum aggregation capabilities of 1000MHz, 1200MHz, 1400MHz and 1600MHz in the fallback group FBG2.

**Table 3**

| **Intra-band contiguous CA bandwidth class** | **Number of contiguous CC** | | **Fallback group** |
|---|---|---|---|
| | **FBG3** | **FBG2** | |
| MA | 8 | 1 | 2-3 |
| MD | 8 | 2 | |
| ME | 8 | 3 | |
| MF | 8 | 4 | |

As shown in Table 3, currently RAN4 discusses the introduction of 4 aggregation bandwidth classes of contiguous carrier aggregation across fallback groups (Intra-band contiguous CA bandwidth class) in FR2, for example, an aggregation bandwidth class M (eight 100MHz carriers) in fallback group 3 and an aggregation bandwidth class A (one 200MHz carrier) in fallback group 2 are combined to form an aggregation bandwidth class MA (nine contiguous carriers with an aggregated bandwidth of 1000MHz). There are other possible aggregation bandwidth classes MD, ME, MF etc. The fallback groups corresponding to the aggregation bandwidth classes MA, MD, ME, and MF of contiguous carrier aggregation are all FBG2-3.

Currently, the aggregation bandwidth class of contiguous carrier aggregation in the frequency band is reported in the following Information Elements (IEs) by way of enumeration.

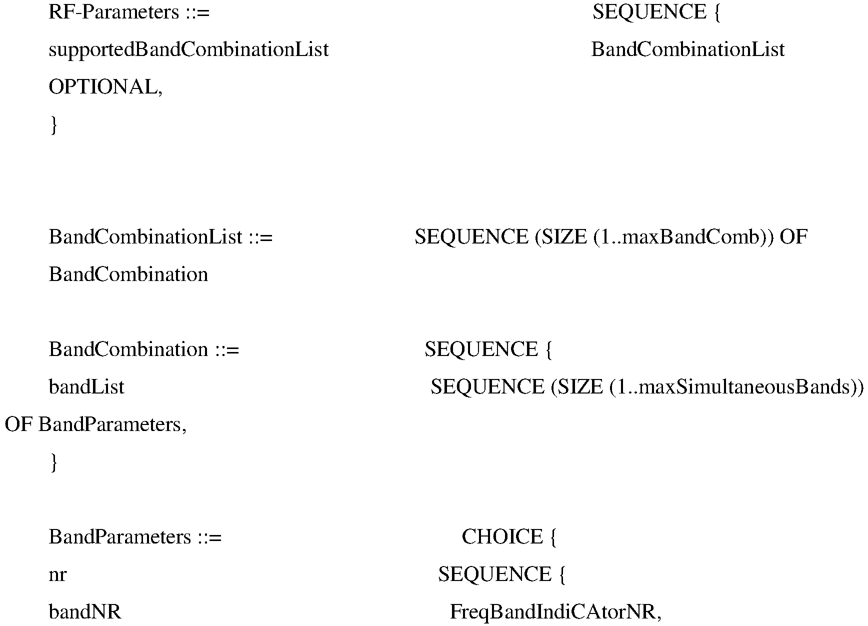

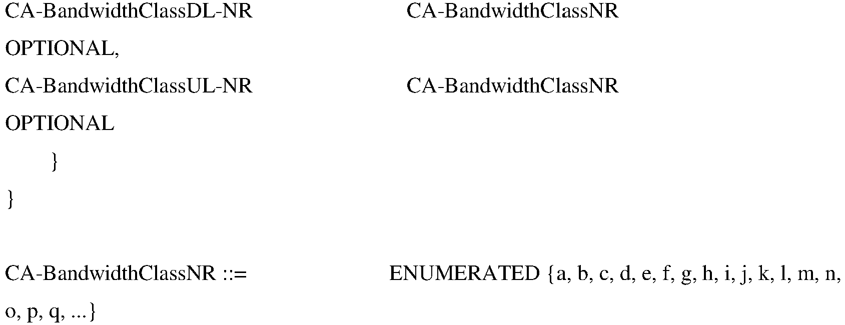

The NR carrier aggregation bandwidth class signaling IE CA-BandwidthClassNR reserves extension bits, and a new combination of aggregation bandwidth classes R, S, T, U, MA, MD, ME, MF can be directly extended in the existing IE CA-BandwidthClassNR. The above IEs are used to report that the UE supports the new aggregation bandwidth classes.

With the continuous enhancement of terminal capabilities, operators propose to add greater aggregation bandwidth classes, for example, adding aggregation bandwidth classes respectively having the maximum aggregation capabilities of 1000MHz, 1200MHz, 1400MHz and 1600MHz in the fallback group FBG2. Further operators put forward a need of the aggregation bandwidth class of contiguous carrier aggregation across fallback groups.

If the new aggregation bandwidth combination is directly extended in the existing IE CA-BandwidthClassNR, it will cause a problem of network backward compatibility. For example, when a terminal reports that it supports the aggregation bandwidth classes R, S, T, U through IE CA-BandwidthClassNR in the supportedBandCombinationList of signaling, some networks cannot recognize the newly extended aggregation bandwidth class in IE CA-BandwidthClassNR, resulting in the network being unable to configure the corresponding aggregation bandwidth for the terminal.

Specifically, if the new aggregation bandwidth classes R, S, T, U, MA, MD, ME, MF are directly extended in the existing carrier aggregation bandwidth class signaling IE CA-BandwidthClassNR, it may cause the problem of network backward compatibility. For example, when a terminal reports that it supports the aggregation bandwidth classes R, S, T, U through the carrier aggregation bandwidth class signaling IE CA-BandwidthClassNR in the supported frequency band combination list SupportedBandCombinationList, if a network side device cannot recognize the newly extended aggregation bandwidth classes R, S, T, U in IE CA-BandwidthClassNR, the network side device cannot configure the corresponding aggregation bandwidth for the terminal.

It can be understood that the communication system described in the embodiments of the present disclosure is described to illustrate the technical solution of the embodiments of the present disclosure more clearly, and does not constitute a limitation to the technical solution provided in the embodiments of the present disclosure. With the evolution of the system architecture and the emergence of new business scenarios, the technical solution provided in the embodiments of the present disclosure is also applicable to similar technical problems.

A method and an apparatus for reporting a multi-carrier aggregation capability provided in the present disclosure will be described below in detail with reference to the accompanying drawings.

With reference to FIG. 2, FIG. 2 is a flowchart of a method for acquiring a multi-carrier aggregation capability provided by an embodiment of the present disclosure. The method is executed by a network side device. As illustrated in FIG. 2, the method may include, but is not limited to, the following steps.

Step S201, an aggregation bandwidth class or aggregation capability information supported by a terminal device are reported to the network side device through a first signaling, and the aggregation bandwidth class supported by the terminal device is reported to the network side device through a second signaling. The aggregation bandwidth class reported through the second signaling is a fallback aggregation bandwidth class of the aggregation bandwidth class reported through the first signaling.

In a possible embodiment, the terminal device supports one or more of aggregation bandwidth classes R, S, T, U, and the terminal device sends the first signaling and the second signaling to the network side device. The first signaling is supportedBandCombinationList-v17xy. The suffix "-v17xy" is optional and can be changed according to different Releases (for example, it may be referred to as "v18xy" in Release18), and "xy" is a serial number, which is applicable to the followings and will be not elaborated. The downlink support of the terminal device for one or more aggregation bandwidth classes of R, S, T, U is reported through the CA-BandwidthClassDL-NR-v17xy in the supportedBandCombinationList-v17xy; or the uplink support of the terminal device for any one or more aggregation bandwidth classes of R, S, T, U is reported through the CA-BandwidthClassUL-NR-v17xy in the supportedBandCombinationList-v17xy. The suffix "-v17xy" is optional and can be changed according to different Releases, and "xy" is the serial number, which is applicable to the followings and will be not elaborated. The second signaling is supportedBandCombinationList. The downlink support of the terminal device for the aggregation bandwidth class F is reported through the CA-BandwidthClassDL-NR in the supportedBandCombinationList; or the uplink support of the terminal device for the aggregation bandwidth class F is reported through the CA-BandwidthClassUL-NR in the supportedBandCombinationList.

In a possible embodiment, the terminal device supports aggregation bandwidth classes MA, MD, ME, and MF, and the terminal device sends the first signaling and the second signaling to the network side device. The first signaling is supportedBandCombinationList-v17xy, where "xy" is a serial number. The downlink support of the terminal device for any one or more aggregation bandwidth classes of MA, MD, ME, and MF is reported through the CA-BandwidthClassDL-NR-v17xy in the supportedBandCombinationList-v17xy; or the uplink support of the terminal device for any one or more aggregation bandwidth classes of MA, MD, ME, and MF is reported through the CA-BandwidthClassUL-NR-v17xy in the supportedBandCombinationList-v17xy. The second signaling is supportedBandCombinationList. The downlink support of the terminal device for the aggregation bandwidth class M or A is reported through the CA-BandwidthClassDL-NR in the supportedBandCombinationList, or the uplink support of the terminal device for the aggregation bandwidth class M or A is reported through the CA-BandwidthClassUL-NR in the supportedBandCombinationList.

In a possible embodiment, the terminal device supports aggregation bandwidth classes MA, MD, ME, and MF, and the terminal device sends the first signaling and the second signaling to the network side device. The first signaling is supportedBandCombinationList-v17xy, where "xy" is a serial number. When the downlink support for any one or more aggregation bandwidth classes of MA, MD, ME, and MF is reported through the CA-BandwidthClassDL1-NR-v17xy and the CA-BandwidthClassDL2-NR-v17xy in the supportedBandCombinationList-v17xy signaling (for example, the CA-BandwidthClassDL1-NR-v17xy is used to report M and the CA-BandwidthClassDL2-NR-v17xy is used to report A, to indicate that the terminal device supports the aggregation bandwidth class MA), or the uplink support for any one or more aggregation bandwidth classes of MA, MD, ME, and MF is reported through the CA-BandwidthClassUL1-NR-v17xy and the CA-BandwidthClassUL2-NR-v17xy in the supportedBandCombinationList-v17xy signaling, the downlink support for the aggregation bandwidth class M or A is reported through the CA-BandwidthClassDL-NR in the supportedBandCombinationList signaling or the uplink support for the aggregation bandwidth class M or A is reported through the CA-BandwidthClassUL-NR in the supportedBandCombinationList signaling, in which the second signaling is supportedBandCombinationList.

Of course, in the embodiments of the present disclosure, the first signaling and the second signaling may be different signaling, or, in another possible implementation, the first signaling and the second signaling may be different fields of the same signaling. In the embodiments of the present disclosure, the network side device may not be able to recognize the newly added aggregation bandwidth class due to outdated versions. In order to prevent the network side device from being unable to recognize the newly extended aggregation bandwidth class, the network side device cannot configure the corresponding aggregation bandwidth for the terminal device. The aggregation bandwidth class reported through the second signaling is a fallback aggregation bandwidth class of the aggregation bandwidth class reported through the first signaling. As shown in Table 2, in a possible embodiment, the aggregation bandwidth class reported through the first signaling is at least one of: R, S, T or U, then the aggregation bandwidth class reported through the second signaling is FBG2.

By implementing the embodiments of the present disclosure, the aggregation bandwidth class supported by the terminal device may be reported according to the first signaling and the second signaling. In this way, it can be avoided that the network side device cannot be compatible with the aggregation bandwidth class included in the first signaling, thereby facilitating avoiding waste of resources.

Alternatively, the aggregation bandwidth class reported through the first signaling and the aggregation bandwidth class reported through the second signaling belong to a same fallback group; or
the aggregation bandwidth class reported through the second signaling and the aggregation bandwidth class reported through the first signaling are located in different fallback groups; or
a fallback group to which the aggregation bandwidth class reported through the second signaling belongs is a subgroup of a fallback group to which the aggregation bandwidth class reported through the first signaling belongs.

The terminal device reports the supportedBandCombinationList signaling through the second signaling, and reports the supportedBandCombinationList-v17xy signaling through the first signaling. When the terminal reports its downlink support for one or more aggregation bandwidth classes of R, S, T, U through the CA-BandwidthClassDL-NR-v17xy in the supportedBandCombinationList-v17xy signaling or reports its uplink support for one or more aggregation bandwidth classes of R, S, T, U through the CA-BandwidthClassUL-NR-v17xy in the supportedBandCombinationList-v17xy signaling, the terminal can only report its downlink support for the aggregation bandwidth class F through the CA-BandwidthClassDL-NR in the supportedBandCombinationList signaling or report its uplink support for the aggregation bandwidth class F through the CA-BandwidthClassUL-NR in the supportedBandCombinationList signaling. The R, S, T, U and F all belong to the fallback group 2.

In a possible embodiment, the aggregation bandwidth class reported through the first signaling is MA, then the aggregation bandwidth class reported through the second signaling is M or A, and the aggregation bandwidth class is MA and belongs to the fallback group 2- 3. The aggregation bandwidth class M belongs to the fallback group 3, and the aggregation bandwidth class A belongs to the fallback group 2 and the fallback group 3. The fallback group to which the aggregation bandwidth class M or the aggregation bandwidth class A belongs is different from the fallback group to which the aggregation bandwidth class MA belongs.

In a possible embodiment, the aggregation bandwidth class reported through the first signaling is MD, then the aggregation bandwidth class reported through the second signaling is M or D, and the aggregation bandwidth class is MD and belongs to the fallback group 2-3. The aggregation bandwidth class M belongs to the fallback group 3, and the aggregation bandwidth class D belongs to the fallback group 2. The fallback group to which the aggregation bandwidth class M or the aggregation bandwidth class D belongs is different from the fallback group to which the aggregation bandwidth class MD belongs.

In a possible embodiment, the aggregation bandwidth class reported through the first signaling is ME, then the aggregation bandwidth class reported through the second signaling is M or E, and the aggregation bandwidth class is ME and belongs to the fallback group 2-3. The aggregation bandwidth class M belongs to the fallback group 3, and the aggregation bandwidth class E belongs to the fallback group 2. The fallback group to which the aggregation bandwidth class M or the aggregation bandwidth class E belongs is different from the fallback group to which the aggregation bandwidth class ME belongs.

In a possible embodiment, the aggregation bandwidth class reported through the first signaling is MF, then the aggregation bandwidth class reported through the second signaling is M or F, and the aggregation bandwidth class is MF and belongs to the fallback group 2-3. The aggregation bandwidth class M belongs to the fallback group 3, and the aggregation bandwidth class F belongs to the fallback group 2. The fallback group to which the aggregation bandwidth class M or the aggregation bandwidth class F belongs is different from the fallback group to which the aggregation bandwidth class MF belongs.

In a possible embodiment, the terminal device needs to report the supportedBandCombinationList signaling through the second signaling, and report the supportedBandCombinationList-v17xy signaling through the first signaling. When the terminal device reports its downlink support for the aggregation bandwidth class MA or its uplink support for the aggregation bandwidth class MA through the first signaling, the terminal device can only report its downlink support for the aggregation bandwidth class M or A through the CA-BandwidthClassDL-NR in the supportedBandCombinationList signaling or report its uplink support for the aggregation bandwidth class M or A through the CA-BandwidthClassUL-NR in the supportedBandCombinationList signaling. The aggregation bandwidth class MA belongs to the fallback group 2-3, the aggregation bandwidth class M belongs to the fallback group 3, and the aggregation bandwidth class A belongs to the fallback group 2 and the fallback group 3. Both the fallback group 3 and the fallback group 2 are subgroups of the fallback group 2-3, that is, the fallback group to which the aggregation bandwidth class M or the aggregation bandwidth class A belongs is a subgroup of the fallback group to which the aggregation bandwidth class MA belongs.

In a possible embodiment, when the terminal device reports its downlink support for the aggregation bandwidth class MD or its uplink support for the aggregation bandwidth class MD through the first signaling, the terminal device can only report its downlink support for the aggregation bandwidth class M or D through the CA-BandwidthClassDL-NR in the supportedBandCombinationList signaling or report its uplink support for the aggregation bandwidth class M or D through the CA-BandwidthClassUL-NR in the supportedBandCombinationList signaling. The aggregation bandwidth class MD belongs to the fallback group 2-3, the aggregation bandwidth class M belongs to the fallback group 3, and the aggregation bandwidth class D belongs to the fallback group 2. Both the fallback group 3 and the fallback group 2 are subgroups of the fallback group 2-3, that is, the fallback group to which the aggregation bandwidth class M or the aggregation bandwidth class D belongs is a subgroup of the fallback group to which the aggregation bandwidth class MD belongs.

In a possible embodiment, when the terminal device reports its downlink support for the aggregation bandwidth class ME or its uplink support for the aggregation bandwidth class ME through the first signaling, the terminal device can only report its downlink support for the aggregation bandwidth class M or E through the CA-BandwidthClassDL-NR in the supportedBandCombinationList signaling or report its uplink support for the aggregation bandwidth class M or E through the CA-BandwidthClassUL-NR in the supportedBandCombinationList signaling. The aggregation bandwidth class ME belongs to the fallback group 2-3, the aggregation bandwidth class M belongs to the fallback group 3, and the aggregation bandwidth class E belongs to the fallback group 2. Both the fallback group 3 and the fallback group 2 are subgroups of the fallback group 2-3, that is, the fallback group to which the aggregation bandwidth class M or the aggregation bandwidth class E belongs is a subgroup of the fallback group to which the aggregation bandwidth class ME belongs.

In a possible embodiment, when the terminal device reports its downlink support for the aggregation bandwidth class MF or its uplink support for the aggregation bandwidth class MF through the first signaling, the terminal device can only report its downlink support for the aggregation bandwidth class M or F through the CA-BandwidthClassDL-NR in the supportedBandCombinationList signaling or report its uplink support for the aggregation bandwidth class M or F through the CA-BandwidthClassUL-NR in the supportedBandCombinationList signaling. The aggregation bandwidth class MF belongs to the fallback group 2-3, the aggregation bandwidth class M belongs to the fallback group 3, and the aggregation bandwidth class F belongs to the fallback group 2. Both the fallback group 3 and the fallback group 2 are subgroups of the fallback group 2-3, that is, the fallback group to which the aggregation bandwidth class M or the aggregation bandwidth class F belongs is a subgroup of the fallback group to which the aggregation bandwidth class MF belongs.

Alternatively, the aggregation capability information is used to respectively report an aggregation state in an uplink frequency band and an aggregation state in a downlink frequency band supported by the terminal device, or report an aggregation state in a frequency band.

In embodiments of the present disclosure, the aggregation capability information is used to report the aggregation states in the uplink frequency band and the downlink frequency band supported by the terminal device, and the aggregation state includes: contiguous, non-contiguous, contiguous and non-contiguous. The multi-carrier aggregation technology is classified into intra-band carrier aggregation and inter-band carrier aggregation. Both contiguous carrier aggregation and non-contiguous carrier aggregation can be performed in the frequency band. In order to support different types of carrier aggregation, the terminal device needs to report the aggregation states in the supported uplink and downlink frequency bands, or report the aggregation state in the supported frequency band.

The uplink and downlink aggregation states may be uniformly configured by a supported intra-band carrier aggregation Intra-bandCA-support-v17xy signaling, that is, the uplink and downlink carrier aggregation states must be consistent.

In a possible embodiment, the aggregation capability information is used to report that the aggregation states in the uplink and downlink frequency bands supported by the terminal device are both contiguous, then the network side device indicates that the aggregation states in the uplink and downlink frequency bands of the terminal device are both contiguous.

In a possible embodiment, the aggregation capability information is used to report that the aggregation states in the uplink and downlink frequency bands supported by the terminal device are both non-contiguous, then the network side device indicates that the aggregation states in the uplink and downlink frequency bands of the terminal device are both non-contiguous.

In a possible embodiment, the aggregation capability information is used to report that both the aggregation states in the uplink and downlink frequency bands supported by the terminal device are contiguous or non-contiguous, then the network side device determines, based on a preconfigured determination mechanism, the aggregation states in the uplink and downlink frequency bands configured for the terminal device. If the network side device determines that the aggregation state needs to be configured as non-contiguous, then the network side device indicates that the aggregation states in the uplink and downlink frequency bands of the terminal device are both non-contiguous.

In a possible embodiment, the uplink and downlink aggregation states may be respectively configured based on a combination of the supported intra-band uplink carrier aggregation Intra-bandCAUL-support-v17xy signaling and the supported intra-band downlink carrier aggregation intra-band CADL-support-v17xy signaling, that is, the uplink and downlink carrier aggregation states can be consistent or inconsistent.

In a possible embodiment, the aggregation capability information is used to report that the aggregation state in the uplink frequency band supported by the terminal device is contiguous and the aggregation state in the downlink frequency band supported by the terminal device is contiguous, then the network side device indicates that the aggregation states in the uplink and downlink frequency bands of the terminal device are both contiguous.

In a possible embodiment, the aggregation capability information is used to report that the aggregation state in the uplink frequency band supported by the terminal device is contiguous and the aggregation state in the downlink frequency band supported by the terminal device is non-contiguous, then the network side device indicates that the aggregation state in the uplink frequency band of the terminal device is contiguous and the aggregation state in the downlink frequency band of the terminal device is non-contiguous.

In a possible embodiment, the aggregation capability information is used to report that the aggregation state in the uplink frequency band supported by the terminal device is non-contiguous and the aggregation state in the downlink frequency band supported by the terminal device is contiguous, then the network side device indicates that the aggregation state in the uplink frequency band of the terminal device is non-contiguous and the aggregation state in the downlink frequency band of the terminal device is contiguous.

In a possible embodiment, the aggregation capability information is used to report that the aggregation state in the uplink frequency band supported by the terminal device is non-contiguous and the aggregation state in the downlink frequency band supported by the terminal device is non-contiguous, then the network side device indicates that the aggregation states in the uplink and downlink frequency bands of the terminal device are both non-contiguous.

In a possible embodiment, the aggregation capability information is used to report that the aggregation state in the uplink frequency band supported by the terminal device is contiguous and non-contiguous and the aggregation state in the downlink frequency band supported by the terminal device is non-contiguous, then the network side device determines, based on a preconfigured determination mechanism, the aggregation state in the uplink frequency band configured for the terminal device. If the network side device determines that the aggregation state in the uplink frequency band needs to be configured as non-contiguous, then the network side device indicates that the aggregation state in the uplink frequency band of the terminal device is non-contiguous and the aggregation state in the downlink frequency band of the terminal device is non-contiguous. If the network side device determines that the aggregation state in the uplink frequency band needs to be configured as contiguous, then the network side device indicates that the aggregation states in the uplink and downlink frequency bands of the terminal device are both contiguous.

In a possible embodiment, the aggregation capability information is used to report that the aggregation state in the uplink frequency band supported by the terminal device is contiguous and non-contiguous and the aggregation state in the downlink frequency band supported by the terminal device is contiguous, then the network side device determines, based on a preconfigured determination mechanism, the aggregation state in the uplink frequency band configured for the terminal device. The network side device indicates that the aggregation states in the uplink and downlink frequency bands of the terminal device are both contiguous, or indicates that the aggregation state in the uplink frequency band of the terminal device is non-contiguous and the aggregation state in the downlink frequency band of the terminal device is contiguous.

In a possible embodiment, the aggregation capability information is used to report that the aggregation state in the uplink frequency band supported by the terminal device is contiguous and the aggregation state in the downlink frequency band supported by the terminal device is contiguous and non-contiguous, then the network side device determines, based on a preconfigured determination mechanism, the aggregation state in the downlink frequency band configured for the terminal device. The network side device indicates that the aggregation states in the uplink and downlink frequency bands of the terminal device are both contiguous, or indicates that the aggregation state in the uplink frequency band of the terminal device is contiguous and the aggregation state in the downlink frequency band of the terminal device is non-contiguous.

In a possible embodiment, the aggregation capability information is used to report that the aggregation state in the uplink frequency band supported by the terminal device is non-contiguous and the aggregation state in the downlink frequency band supported by the terminal device is contiguous and non-contiguous, then the network side device determines, based on a preconfigured determination mechanism, the aggregation state in the downlink frequency band configured for the terminal device. The network side device indicates that the aggregation states in the uplink and downlink frequency bands of the terminal device are both non-contiguous, or indicates that the aggregation state in the uplink frequency band of the terminal device is non-contiguous and the aggregation state in the downlink frequency band of the terminal device is contiguous.

In a possible embodiment, the aggregation capability information is used to report that the aggregation state in the uplink frequency band supported by the terminal device is contiguous and non-contiguous and the aggregation state in the downlink frequency band supported by the terminal device is contiguous and non-contiguous, then the network side device determines, based on a preconfigured determination mechanism, the aggregation states in the uplink and downlink frequency bands configured for the terminal device. The network side device indicates that the aggregation states in the uplink and downlink frequency bands of the terminal device are both contiguous, or indicates that the aggregation state in the uplink frequency band of the terminal device is contiguous and the aggregation state in the downlink frequency band of the terminal device is non-contiguous, or indicates that the aggregation states in the uplink and downlink frequency bands of the terminal device are both non-contiguous, or indicates that the aggregation state in the uplink frequency band of the terminal device is non-contiguous and the aggregation state in the downlink frequency band of the terminal device is contiguous.

Alternatively, the aggregation state includes at least one of:
contiguous;
non-contiguous; or
contiguous and non-contiguous.

In an embodiment of the present disclosure, the multi-carrier aggregation technology is classified into intra-band carrier aggregation and inter-band carrier aggregation. Both contiguous carrier aggregation and non-contiguous carrier aggregation can be performed in the frequency band. In order to support different types of carrier aggregation, the terminal device needs to report the aggregation states in the supported uplink and downlink frequency bands, or report the aggregation state in the supported frequency band. Contiguous carrier aggregation means that the carriers to be aggregated are close together, and non-contiguous carrier aggregation means that there is an interval between the carriers to be aggregated, which are not contiguous carriers.

Alternatively, the first signaling is a new radio (NR) carrier aggregation bandwidth class CA-BandwidthClassNR-v17xy signaling, where xy is a serial number.

In an embodiment of the present disclosure, the suffix "-v17xy" is optional and can be changed according to different Releases (for example, it may be referred to as "v18xy" in Release18), and "xy" is a serial number.

Alternatively, the first signaling includes at least one of: an NR downlink carrier aggregation bandwidth class CA-BandwidthClassDL-NR-v17xy signaling, an NR uplink carrier aggregation bandwidth class CA-BandwidthClassUL-NR-v17xy signaling, a frequency band parameter BandParameters-v17xy signaling, a frequency band list BandList-v17xy signaling, a frequency band combination BandCombination-v17xy signaling, a frequency band combination list BandCombinationList-v17xy signaling, or a supported frequency band combination list SupportedBandCombinationList-v17xy signaling.

In an embodiment of the present disclosure, the aggregation bandwidth class supported by the terminal device may be one or more of R, S, T, and U, and reported through the first signaling. The CA-BandwidthClassNR-v17xy is an upper signaling, which is contained layer by layer by the following other signaling. The other signaling includes: the CA-BandwidthClassDL-NR-v17xy signaling, used to report the aggregation bandwidth class supported by the terminal device on downlink; the CA-BandwidthClassUL-NR-v17xy signaling, used to report the aggregation bandwidth class supported by the terminal device on uplink; the BandParameters-v17xy signaling, used to carry the CA-BandwidthClassDL-NR-v17xy signaling and the CA-BandwidthClassUL-NR-v17xy signaling; the BandList-v17xy signaling, used to report a frequency band list in carrier aggregation; the BandCombination-v17xy signaling, used to report a frequency band combination list in carrier aggregation; the BandCombinationList-v17xy signaling, used to report a frequency band combination list in carrier aggregation; the SupportedBandCombinationList-v17xy signaling, used to report a frequency band combination supported by the terminal device.

In a possible implementation, the CA-BandwidthClassNR-v17xy signaling, the CA-BandwidthClassDL-NR-v17xy signaling, the CA-BandwidthClassUL-NR-v17xy signaling, the BandParameters-v17xy signaling, the BandList-v17xy signaling, the BandCombination-v17xy signaling, the BandCombinationList-v17xy signaling, and the SupportedBandCombinationList-v17xy signaling have a same identifier. For example, these IEs have the same serial number (i.e., having the consistent "xy").

In some possible implementations, uplink and downlink parameters may be indicated through the same IE. In some other possible implementations, the uplink and downlink parameters may be indicated through the same IE, and the uplink and downlink use the same parameter. In some other possible implementations, the uplink and downlink parameters are indicated through different IEs respectively. For example, the first signaling includes an NR downlink carrier aggregation bandwidth class CA-BandwidthClassDL1-NR-v17xy signaling and an NR downlink carrier aggregation Bandwidth class CA-BandwidthClassDL2-NR-v17xy signaling, or an NR uplink carrier aggregation bandwidth class CA-BandwidthClassUL1-NR-v17xy signaling and an NR uplink carrier aggregation bandwidth class CA-BandwidthClassUL2-NR-v17xy signaling.

The CA-BandwidthClassNR-v17xy is an upper signaling, and the upper signaling is contained layer by layer by the following other signaling. The other signaling includes: the NR downlink carrier aggregation bandwidth class CA-BandwidthClassDL1-NR-v17xy signaling and the NR downlink carrier aggregation bandwidth class CA-BandwidthClassDL2-NR-v17xy signaling, or the NR uplink carrier aggregation bandwidth class CA- BandwidthClassUL1-NR-v17xy signaling and the NR uplink carrier aggregation bandwidth class CA-BandwidthClassUL2-NR-v17xy signaling.

In an embodiment of the present disclosure, the aggregation bandwidth class supported by the terminal device may be one or more of MA, MD, ME, and MF, and reported through the first signaling. The terminal device reports its downlink support for any one or more aggregation bandwidth classes of MA, MD, ME, and MF through the CA-BandwidthClassDL1-NR-v17xy signaling and the CA-BandwidthClassDL2-NR-v17xy signaling in the supportedBandCombinationList-v17xy; or the terminal device reports its uplink support for any one or more aggregation bandwidth classes of MA, MD, ME, and MF through the CA-BandwidthClassUL1-NR-v17xy signaling and the CA-BandwidthClassUL2-NR-v17xy signaling.

Alternatively, the first signaling includes at least one of the frequency band parameter BandParameters-v17xy signaling, the frequency band list BandList-v17xy signaling, the frequency band combination BandCombination-vl7xy signaling, the frequency band combination list BandCombinationList-v17xy signaling, the supported frequency band combination list supportedBandCombinationList-v17xy signaling.

The CA-BandwidthClassNR-v17xy is an upper signaling, which is contained layer by layer by the following other signaling. The other signaling includes: the BandParameters-v17xy signaling, used to report a frequency band parameter; the BandList-v17xy signaling, used to report a frequency band list; the BandCombination-v17xy signaling, used to report a frequency band combination; the BandCombinationList-v17xy signaling, used to report a frequency band combination list; the supportedBandCombinationList-v17xy signaling, used to report a supported frequency band combination list.

Alternatively, the NR downlink carrier aggregation bandwidth class CA-BandwidthClassDL1-NR-v17xy signaling, the NR downlink carrier aggregation bandwidth class CA-BandwidthClassDL2-NR-v17xy signaling, and the NR uplink carrier aggregation bandwidth class CA-BandwidthClassUL1-NR-v17xy signaling, the NR uplink carrier aggregation bandwidth class CA-BandwidthClassUL2-NR-v17xy signaling, the frequency band parameter BandParameters-v17xy signaling, the frequency band list BandList-v17xy signaling, the frequency band combination BandCombination-v17xy signaling, the frequency band combination list BandCombinationList-v17xy signaling, the supported frequency band combination list supportedBandCombinationList-v17xy signaling have a corresponding identifier. For example, these IEs have the same serial number (i.e., having the consistent "xy").

Alternatively, the aggregation bandwidth class reported through the first signaling is one or more of extended aggregation bandwidth classes R, S, T, U, MA, MD, ME, and MF.

In an embodiment of the present disclosure, the aggregation bandwidth class reported through the first signaling is one or more of extended new aggregation bandwidth classes R, S, T, U, MA, MD, ME, and MF.

Alternatively, when the aggregation bandwidth class reported through the first signaling is one or more of R, S, T and U, the aggregation bandwidth class reported through the second signaling is F.

In an embodiment of the present disclosure, the terminal device reports the supportedBandCombinationList signaling through the second signaling, and reports the supportedBandCombinationList-v17xy signaling through the first signaling. When the terminal reports its downlink support for any aggregation bandwidth class of R, S, T, U through the CA-BandwidthClassDL-NR-v17xy in the supportedBandCombinationList-v17xy signaling or reports its uplink support for any aggregation bandwidth class of R, S, T and U through the CA-BandwidthClassUL-NR-v17xy in the supportedBandCombinationList-v17xy signaling, the terminal can only report its downlink support for the aggregation bandwidth class F through the CA-BandwidthClassDL-NR in the supportedBandCombinationList signaling or report its uplink support for the aggregation bandwidth class F through the CA-BandwidthClassUL-NR in the supportedBandCombinationList signaling. The aggregation bandwidth class may include R, S, T, U, and F which all belong to the fallback group 2.

Alternatively, when the aggregation bandwidth class reported through the first signaling is one or more of MA, MD, ME and MF, the aggregation bandwidth class reported through the second signaling is one of M, F, E, D, or A.

In an embodiment of the present disclosure, the terminal device needs to report the supportedBandCombinationList signaling through the second signaling, and report the supportedBandCombinationList-v17xy signaling through the first signaling. When the terminal device reports its downlink support for any aggregation bandwidth class of MA, MD, ME, and MF through the CA-BandwidthClassDL1-NR-v17xy and the CA-BandwidthClassDL2-NR-v17xy in the supportedBandCombinationList-v17xy signaling (for example, the CA-BandwidthClassDL1-NR-v17xy is used to report M and the CA-BandwidthClassDL2-NR-v17xy is used to report A, to indicate that the terminal device supports the aggregation bandwidth class MA) or reports its uplink support for any aggregation bandwidth class of MA, MD, ME, and MF through the CA-BandwidthClassUL1-NR-v17xy and the CA-BandwidthClassUL2-NR-v17xy in the supportedBandCombinationList-v17xy signaling, the terminal device can only report its downlink support for the aggregation bandwidth class M or F through the CA-BandwidthClassDL-NR in the supportedBandCombinationList signaling or report its uplink support for the aggregation bandwidth class M or F through the CA-BandwidthClassUL-NR in the supportedBandCombinationList signaling. The aggregation bandwidth class may include MA, MD, ME, and MF which all belong to the fallback group 2-3. The aggregation bandwidth class M belongs to the fallback group 3, and the aggregation bandwidth class F belongs to the fallback group 2. The fallback group 3 and the fallback group 2 are both subgroups of the fallback group 2-3. That is, the fallback group to which the aggregation bandwidth class M or the aggregation bandwidth class F belongs is the subgroup of the fallback group to which the aggregation bandwidth classes MA, MD, ME, and MF belong.

Alternatively, the first signaling includes: a supported intra-band carrier aggregation Intra-bandCA-support-v17xy signaling, and the Intra-bandCA-support-v17xy signaling is used to indicate the aggregation state in the uplink frequency band and the aggregation state in the downlink frequency band supported by the terminal device.

In an embodiment of the present disclosure, the terminal device simultaneously reports the supported carrier aggregation states on uplink and downlink through the first signaling, that is, the uplink and downlink carrier aggregation states must be consistent, as shown in Table 4.

**Table 4**

| IE | Indicated state | aggregation states of uplink and downlink |
|---|---|---|
| Intra-bandCA-supp ort-v17xy | contiguous | both uplink and downlink are contiguous |
| | non-contiguous | both uplink and downlink are non-contiguous |
| | both | both uplink and downlink are contiguous or both uplink and downlink are non-contiguous |

In a possible embodiment, the state indicated by the IE Intra-bandCA-support-v17xy is contiguous, then the supported carrier aggregation states on uplink and downlink reported by the terminal device are both contiguous. The network side device may configure the uplink and downlink of the terminal device to be a contiguous carrier aggregation state.

In a possible embodiment, the state indicated by the IE Intra-bandCA-support-v17xy is non-contiguous, then the supported carrier aggregation states on uplink and downlink reported by the terminal device are both non-contiguous. The network side device may configure the uplink and downlink of the terminal device to be a non-contiguous carrier aggregation state.

In a possible embodiment, the state indicated by the IE Intra-bandCA-support-v17xy is both, then the supported carrier aggregation states on uplink and downlink reported by the terminal device may be contiguous, or may be non-contiguous. The network side device determines, based on a preconfigured determination mechanism, the aggregation states in the uplink and downlink frequency bands configured for the terminal device. If the network side device determines that the aggregation state needs to be configured as contiguous, then the network side device indicates that the aggregation states in the uplink and downlink frequency bands of the terminal device are both contiguous. If the network side device determines that the aggregation state needs to be configured as non-contiguous, then the network side device indicates that the aggregation states in the uplink and downlink frequency bands of the terminal device are both non-contiguous.

Alternatively, the first signaling includes: a combination of a supported intra-band uplink carrier aggregation Intra-bandCAUL-support-v17xy signaling and a supported intra-band downlink carrier aggregation Intra-bandCADL-support-v17xy signaling. The Intra-bandCAUL-support-v17xy signaling and the Intra-bandCADL-support-v17xy signaling are respectively used to indicate an uplink carrier aggregation state and a downlink carrier aggregation state.

The CA-BandwidthClassNR-v17xy is an upper signaling, which is contained layer by layer by the following other signaling. The other signaling includes: the combination of the supported intra-band uplink carrier aggregation Intra-bandCAUL-support-v17xy signaling and the supported intra-band downlink carrier aggregation Intra-bandCADL-support-v17xy signaling. The Intra-bandCAUL-support-v17xy signaling and the Intra-bandCADL-support-v17xy signaling are respectively used to indicate an uplink carrier aggregation state and a downlink carrier aggregation state.

In an embodiment of the present disclosure, the terminal device respectively reports the supported carrier aggregation states of the uplink and downlink through the first signaling, that is, the uplink and downlink carrier aggregation states may not be consistent, as shown in Table 5.

**Table 5**

| Intra-bandCAUL-support-v17xy | Intra-bandCADL-support -v17xy | aggregation states of uplink and downlink |
|---|---|---|
| contiguous | contiguous | both uplink and downlink are contiguous |
| contiguous | non-contiguous | uplink is contiguous and downlink is non-contiguous |
| non-contiguous | contiguous | both uplink and downlink are contiguous |
| non-contiguous | non-contiguous | both uplink and downlink are non-contiguous |
| both | contiguous | both uplink and downlink are contiguous or uplink is non-contiguous and downlink is contiguous |
| both | non-contiguous | both uplink and downlink are non-contiguous or uplink is contiguous and downlink is non-contiguous |
| contiguous | both | both uplink and downlink are contiguous or uplink is contiguous and downlink is non-contiguous |
| non-contiguous | both | both uplink and downlink are non-contiguous or uplink is non-contiguous and downlink is contiguous |
| both | both | both uplink and downlink are contiguous or both uplink and downlink are non-contiguous or uplink is contiguous and downlink is non-contiguous or uplink is non-contiguous and downlink is contiguous |

In a possible embodiment, the state indicated by the IE Intra-bandCAUL-support-v17xy is contiguous, and the state indicated by the IE Intra-bandCADL-support-v17xy is contiguous, then the supported carrier aggregation state on uplink reported by the terminal device is contiguous, and the supported carrier aggregation state on downlink reported by the terminal device is contiguous. The network side device may configure the uplink and downlink of the terminal device to be a contiguous carrier aggregation state.

In a possible embodiment, the state indicated by the IE Intra-bandCAUL-support-v17xy is contiguous, and the state indicated by the IE Intra-bandCADL-support-v17xy is non-contiguous, then the supported carrier aggregation state on uplink reported by the terminal device is contiguous, and the supported carrier aggregation state on downlink reported by the terminal device is non-contiguous. The network side device may configure the uplink of the terminal device to be a contiguous carrier aggregation state, and configure the downlink of the terminal device to be a non-contiguous carrier aggregation state.

In a possible embodiment, the state indicated by the IE Intra-bandCAUL-support-v17xy is non-contiguous, and the state indicated by the IE Intra-bandCADL-support-v17xy is contiguous, then the supported carrier aggregation state on uplink reported by the terminal device is non-contiguous, and the supported carrier aggregation state on downlink reported by the terminal device is contiguous. The network side device may configure the uplink of the terminal device to be a non-contiguous carrier aggregation state, and configure the downlink of the terminal device to be a contiguous carrier aggregation state.

In a possible embodiment, the state indicated by the IE Intra-bandCAUL-support-v17xy is non-contiguous, and the state indicated by the IE Intra-bandCADL-support-v17xy is non-contiguous, then the supported carrier aggregation state on uplink reported by the terminal device is non-contiguous, and the supported carrier aggregation state on downlink reported by the terminal device is non-contiguous. The network side device may configure the uplink and downlink of the terminal device to be a non-contiguous carrier aggregation state.

In a possible embodiment, the state indicated by the IE Intra-bandCAUL-support-v17xy is both, and the state indicated by the IE Intra-bandCADL-support-v17xy is contiguous, then the supported carrier aggregation state on uplink reported by the terminal device is contiguous and non-contiguous, and the supported carrier aggregation state on downlink reported by the terminal device is contiguous. The network side device may configure the uplink and downlink of the terminal device to be a contiguous carrier aggregation state, or the network side device may configure the uplink of the terminal device to be a non-contiguous carrier aggregation state and configure the downlink of the terminal device to be a contiguous carrier aggregation state.

In a possible embodiment, the state indicated by the IE Intra-bandCAUL-support-v17xy is both, and the state indicated by the IE Intra-bandCADL-support-v17xy is non-contiguous, then the supported carrier aggregation state on uplink reported by the terminal device is contiguous and non-contiguous, and the supported carrier aggregation state on downlink reported by the terminal device is non-contiguous. The network side device may configure the uplink and downlink of the terminal device to be a non-contiguous carrier aggregation state, or the network side device may configure the uplink of the terminal device to be a contiguous carrier aggregation state and configure the downlink of the terminal device to be a non-contiguous carrier aggregation state.

In a possible embodiment, the state indicated by the IE Intra-bandCAUL-support-v17xy is contiguous, and the state indicated by the IE Intra-bandCADL-support-v17xy is both, then the supported carrier aggregation state on uplink reported by the terminal device is contiguous, and the supported carrier aggregation state on downlink reported by the terminal device is contiguous and non-contiguous. The network side device may configure the uplink and downlink of the terminal device to be a contiguous carrier aggregation state, or the network side device may configure the uplink of the terminal device to be a contiguous carrier aggregation state and configure the downlink of the terminal device to be a non-contiguous carrier aggregation state.

In a possible embodiment, the state indicated by the IE Intra-bandCAUL-support-v17xy is non-contiguous, and the state indicated by the IE Intra-bandCADL-support-v17xy is both, then the supported carrier aggregation state on uplink reported by the terminal device is non-contiguous, and the supported carrier aggregation state on downlink reported by the terminal device is contiguous and non-contiguous. The network side device may configure the uplink and downlink of the terminal device to be a non-contiguous carrier aggregation state, or the network side device may configure the uplink of the terminal device to be a non-contiguous carrier aggregation state and configure the downlink of the terminal device to be a contiguous carrier aggregation state.

In a possible embodiment, the state indicated by the IE Intra-bandCAUL-support-v17xy is both, and the state indicated by the IE Intra-bandCADL-support-v17xy is both, then the supported carrier aggregation state on uplink reported by the terminal device is contiguous and non-contiguous, and the supported carrier aggregation state on downlink reported by the terminal device is contiguous and non-contiguous. The network side device may configure the uplink and downlink of the terminal device to be a non-contiguous carrier aggregation state, or network side device may configure the uplink and downlink of the terminal device to be a contiguous carrier aggregation state, or the network side device may configure the uplink of the terminal device to be a contiguous carrier aggregation state and configure the downlink of the terminal device to be a non-contiguous carrier aggregation state, or the network side device may configure the uplink of the terminal device to be a non-contiguous carrier aggregation state and configure the downlink of the terminal device to be a contiguous carrier aggregation state.

Alternatively, the first signaling further includes at least one of: a frequency band parameter BandParameters-v17xy signaling, a frequency band list BandList-v17xy signaling, a frequency band combination BandCombination-v17xy signaling, a frequency band combination list BandCombinationList-v17xy signaling, or a supported frequency band combination list SupportedBandCombinationList-v17xy signaling.

In an embodiment of the present disclosure, the CA-BandwidthClassNR-v17xy is an upper signaling, which is contained layer by layer by the following other signaling. The other signaling includes: the BandParameters-v17xy signaling, used to report a frequency band parameter; the BandList-v17xy signaling, used to report a frequency band list in carrier aggregation; the BandCombination-v17xy signaling, used to report a frequency band combination in carrier aggregation; the BandCombinationList-v17xy signaling, used to report a frequency band combination list in carrier aggregation; the SupportedBandCombinationList-v17xy signaling, used to report a frequency band combination supported by the terminal device.

Alternatively, the supported intra-band carrier aggregation Intra-bandCA-support signaling, the frequency band parameter BandParameters-v17xy signaling, the frequency band list BandList-v17xy signaling, and the frequency band combination BandCombination-v17xy signaling, the frequency band combination list BandCombinationList-v17xy signaling, and the supported frequency band combination list SupportedBandCombinationList-v17xy signaling have a same identifier. For example, these IEs have the same serial number (i.e., having the consistent "xy").

Alternatively, the supported intra-band uplink carrier aggregation Intra-bandCAUL-support signaling, the supported intra-band downlink carrier aggregation Intra-bandCADL-support signaling, and the frequency band parameter BandParameters-v17xy signaling, the frequency band list BandList-v17xy signaling, the frequency band combination BandCombination-v17xy signaling, the frequency band combination list BandCombinationList-v17xy signaling, and the supported frequency band combination list SupportedBandCombinationList-v17xy have a same identifier. For example, these IEs have the same serial number (i.e., having the consistent "xy").

With reference to FIG. 3, FIG. 3 is a flowchart of a method for acquiring a multi-carrier aggregation capability provided by an embodiment of the present disclosure. The method is executed by a network side device. As illustrated in FIG. 3, the method may include, but is not limited to, the following steps.

Step S301, a first signaling and a second signaling sent by a terminal device are received. The first signaling is configured to indicate an aggregation bandwidth class or aggregation capability information supported by a terminal device, and the second signaling is configured to indicate the aggregation bandwidth class supported by the terminal device. The aggregation bandwidth class reported through the second signaling is a fallback aggregation bandwidth class of the aggregation bandwidth class reported through the first signaling.

In a possible embodiment, the terminal device supports one or more of aggregation bandwidth classes R, S, T, U, and the terminal device sends the first signaling and the second signaling to the network side device. The first signaling is supportedBandCombinationList-v17xy. The suffix "-v17xy" is optional and can be changed according to different Releases (for example, it may be referred to as "v18xy" in Release18), and "xy" is a serial number, which is applicable to the followings and will be not elaborated. The downlink support of the terminal device for one or more aggregation bandwidth classes of R, S, T, U is reported through the CA-BandwidthClassDL-NR-v17xy in the supportedBandCombinationList-v17xy; or the uplink support of the terminal device for any one or more aggregation bandwidth classes of R, S, T, U is reported through the CA-BandwidthClassUL-NR-v17xy in the supportedBandCombinationList-v17xy. The suffix "-v17xy" is optional and can be changed according to different Releases, and "xy" is the serial number, which is applicable to the followings and will be not elaborated. The second signaling is supportedBandCombinationList. The downlink support of the terminal device for the aggregation bandwidth class F is reported through the CA-BandwidthClassDL-NR in the supportedBandCombinationList; or the uplink support of the terminal device for the aggregation bandwidth class F is reported through the CA-BandwidthClassUL-NR in the supportedBandCombinationList.

In a possible embodiment, the terminal device supports aggregation bandwidth classes MA, MD, ME, and MF, and the terminal device sends the first signaling and the second signaling to the network side device. The first signaling is supportedBandCombinationList-v17xy, where "xy" is a serial number. The downlink support of the terminal device for any one or more aggregation bandwidth classes of MA, MD, ME, and MF is reported through the CA-BandwidthClassDL-NR-v17xy in the supportedBandCombinationList-v17xy; or the uplink support of the terminal device for any one or more aggregation bandwidth classes of MA, MD, ME, and MF is reported through the CA-BandwidthClassUL-NR-v17xy in the supportedBandCombinationList-v17xy. The second signaling is supportedBandCombinationList. The downlink support of the terminal device for the aggregation bandwidth class M or A is reported through the CA-BandwidthClassDL-NR in the supportedBandCombinationList, or the uplink support of the terminal device for the aggregation bandwidth class M or A is reported through the CA-BandwidthClassUL-NR in the supportedBandCombinationList.

In a possible embodiment, the terminal device supports aggregation bandwidth classes MA, MD, ME, and MF, and the terminal device sends the first signaling and the second signaling to the network side device. The first signaling is supportedBandCombinationList-v17xy, where "xy" is a serial number. When the downlink support for any one or more aggregation bandwidth classes of MA, MD, ME, and MF is reported through the CA-BandwidthClassDL1-NR-v17xy and the CA-BandwidthClassDL2-NR-v17xy in the supportedBandCombinationList-v17xy signaling (for example, the CA-BandwidthClassDL1-NR-v17xy is used to report M and the CA-BandwidthClassDL2-NR-v17xy is used to report A, to indicate that the terminal device supports the aggregation bandwidth class MA), or the uplink support for any one or more aggregation bandwidth classes of MA, MD, ME, and MF is reported through the CA-BandwidthClassUL1-NR-v17xy and the CA-BandwidthClassUL2-NR-v17xy in the supportedBandCombinationList-v17xy signaling, the downlink support for the aggregation bandwidth class M or A is reported through the CA-BandwidthClassDL-NR in the supportedBandCombinationList signaling or the uplink support for the aggregation bandwidth class M or A is reported through the CA-BandwidthClassUL-NR in the supportedBandCombinationList signaling, in which the second signaling is supportedBandCombinationList.

Of course, in the embodiments of the present disclosure, the first signaling and the second signaling may be different signaling, or, in another possible implementation, the first signaling and the second signaling may be different fields of the same signaling. In the embodiments of the present disclosure, the network side device may not be able to recognize the newly added aggregation bandwidth class due to outdated versions. In order to prevent the network side device from being unable to recognize the newly extended aggregation bandwidth class, the network side device cannot configure the corresponding aggregation bandwidth for the terminal device. The aggregation bandwidth class reported through the second signaling is a fallback aggregation bandwidth class of the aggregation bandwidth class reported through the first signaling. As shown in Table 2, in a possible embodiment, the aggregation bandwidth class reported through the first signaling is at least one of: R, S, T or U, then the aggregation bandwidth class reported through the second signaling is FBG2.

By implementing the embodiments of the present disclosure, the aggregation bandwidth class supported by the terminal device may be reported according to the first signaling and the second signaling. In this way, it can be avoided that the network side device cannot be compatible with the aggregation bandwidth class included in the first signaling, thereby facilitating avoiding waste of resources.

Alternatively, the aggregation bandwidth class reported through the first signaling and the aggregation bandwidth class reported through the second signaling belong to a same fallback group; or
the aggregation bandwidth class reported through the second signaling and the aggregation bandwidth class reported through the first signaling are located in different fallback groups; or
a fallback group to which the aggregation bandwidth class reported through the second signaling belongs is a subgroup of a fallback group to which the aggregation bandwidth class reported through the first signaling belongs.

The terminal device reports the supportedBandCombinationList signaling through the second signaling, and reports the supportedBandCombinationList-v17xy signaling through the first signaling. When the terminal reports its downlink support for one or more aggregation bandwidth classes of R, S, T, U through the CA-BandwidthClassDL-NR-v17xy in the supportedBandCombinationList-v17xy signaling or reports its uplink support for one or more aggregation bandwidth classes of R, S, T, U through the CA-BandwidthClassUL-NR-v17xy in the supportedBandCombinationList-v17xy signaling, the terminal can only report its downlink support for the aggregation bandwidth class F through the CA-BandwidthClassDL-NR in the supportedBandCombinationList signaling or report its uplink support for the aggregation bandwidth class F through the CA-BandwidthClassUL-NR in the supportedBandCombinationList signaling. The R, S, T, U and F all belong to the fallback group 2.

In a possible embodiment, the aggregation bandwidth class reported through the first signaling is MA, then the aggregation bandwidth class reported through the second signaling is M or A, and the aggregation bandwidth class is MA and belongs to the fallback group 2- 3. The aggregation bandwidth class M belongs to the fallback group 3, and the aggregation bandwidth class A belongs to the fallback group 2 and the fallback group 3. The fallback group to which the aggregation bandwidth class M or the aggregation bandwidth class A belongs is different from the fallback group to which the aggregation bandwidth class MA belongs.

In a possible embodiment, the aggregation bandwidth class reported through the first signaling is MD, then the aggregation bandwidth class reported through the second signaling is M or D, and the aggregation bandwidth class is MD and belongs to the fallback group 2-3. The aggregation bandwidth class M belongs to the fallback group 3, and the aggregation bandwidth class D belongs to the fallback group 2. The fallback group to which the aggregation bandwidth class M or the aggregation bandwidth class D belongs is different from the fallback group to which the aggregation bandwidth class MD belongs.

In a possible embodiment, the aggregation bandwidth class reported through the first signaling is ME, then the aggregation bandwidth class reported through the second signaling is M or E, and the aggregation bandwidth class is ME and belongs to the fallback group 2-3. The aggregation bandwidth class M belongs to the fallback group 3, and the aggregation bandwidth class E belongs to the fallback group 2. The fallback group to which the aggregation bandwidth class M or the aggregation bandwidth class E belongs is different from the fallback group to which the aggregation bandwidth class ME belongs.

In a possible embodiment, the aggregation bandwidth class reported through the first signaling is MF, then the aggregation bandwidth class reported through the second signaling is M or F, and the aggregation bandwidth class is MF and belongs to the fallback group 2-3. The aggregation bandwidth class M belongs to the fallback group 3, and the aggregation bandwidth class F belongs to the fallback group 2. The fallback group to which the aggregation bandwidth class M or the aggregation bandwidth class F belongs is different from the fallback group to which the aggregation bandwidth class MF belongs.

In a possible embodiment, the terminal device needs to report the supportedBandCombinationList signaling through the second signaling, and report the supportedBandCombinationList-v17xy signaling through the first signaling. When the terminal device reports its downlink support for the aggregation bandwidth class MA or its uplink support for the aggregation bandwidth class MA through the first signaling, the terminal device can only report its downlink support for the aggregation bandwidth class M or A through the CA-BandwidthClassDL-NR in the supportedBandCombinationList signaling or report its uplink support for the aggregation bandwidth class M or A through the CA-BandwidthClassUL-NR in the supportedBandCombinationList signaling. The aggregation bandwidth class MA belongs to the fallback group 2-3, the aggregation bandwidth class M belongs to the fallback group 3, and the aggregation bandwidth class A belongs to the fallback group 2 and the fallback group 3. Both the fallback group 3 and the fallback group 2 are subgroups of the fallback group 2-3, that is, the fallback group to which the aggregation bandwidth class M or the aggregation bandwidth class A belongs is a subgroup of the fallback group to which the aggregation bandwidth class MA belongs.

In a possible embodiment, when the terminal device reports its downlink support for the aggregation bandwidth class MD or its uplink support for the aggregation bandwidth class MD through the first signaling, the terminal device can only report its downlink support for the aggregation bandwidth class M or D through the CA-BandwidthClassDL-NR in the supportedBandCombinationList signaling or report its uplink support for the aggregation bandwidth class M or D through the CA-BandwidthClassUL-NR in the supportedBandCombinationList signaling. The aggregation bandwidth class MD belongs to the fallback group 2-3, the aggregation bandwidth class M belongs to the fallback group 3, and the aggregation bandwidth class D belongs to the fallback group 2. Both the fallback group 3 and the fallback group 2 are subgroups of the fallback group 2-3, that is, the fallback group to which the aggregation bandwidth class M or the aggregation bandwidth class D belongs is a subgroup of the fallback group to which the aggregation bandwidth class MD belongs.

In a possible embodiment, when the terminal device reports its downlink support for the aggregation bandwidth class ME or its uplink support for the aggregation bandwidth class ME through the first signaling, the terminal device can only report its downlink support for the aggregation bandwidth class M or E through the CA-BandwidthClassDL-NR in the supportedBandCombinationList signaling or report its uplink support for the aggregation bandwidth class M or E through the CA-BandwidthClassUL-NR in the supportedBandCombinationList signaling. The aggregation bandwidth class ME belongs to the fallback group 2-3, the aggregation bandwidth class M belongs to the fallback group 3, and the aggregation bandwidth class E belongs to the fallback group 2. Both the fallback group 3 and the fallback group 2 are subgroups of the fallback group 2-3, that is, the fallback group to which the aggregation bandwidth class M or the aggregation bandwidth class E belongs is a subgroup of the fallback group to which the aggregation bandwidth class ME belongs.

In a possible embodiment, when the terminal device reports its downlink support for the aggregation bandwidth class MF or its uplink support for the aggregation bandwidth class MF through the first signaling, the terminal device can only report its downlink support for the aggregation bandwidth class M or F through the CA-BandwidthClassDL-NR in the supportedBandCombinationList signaling or report its uplink support for the aggregation bandwidth class M or F through the CA-BandwidthClassUL-NR in the supportedBandCombinationList signaling. The aggregation bandwidth class MF belongs to the fallback group 2-3, the aggregation bandwidth class M belongs to the fallback group 3, and the aggregation bandwidth class F belongs to the fallback group 2. Both the fallback group 3 and the fallback group 2 are subgroups of the fallback group 2-3, that is, the fallback group to which the aggregation bandwidth class M or the aggregation bandwidth class F belongs is a subgroup of the fallback group to which the aggregation bandwidth class MF belongs.

Alternatively, the method includes: analyzing the first signaling, and determining the aggregation bandwidth class supported by the terminal device based on an analysis result.

The configuration information of different network side devices is different. If a version of the configuration information of the network side device is updated in time, the first signaling can be analyzed, and the aggregation bandwidth class supported by the terminal device can be obtained by analyzing the first signaling.

Alternatively, determining the aggregation bandwidth class supported by the terminal device based on the analysis result includes at least one of:
in response to being able to analyze the first signaling, determining the aggregation bandwidth class or the aggregation capability information supported by the terminal device based on the first signaling, and determining the aggregation bandwidth class supported by the terminal device based on the aggregation bandwidth class supported by the terminal device in the first signaling or determining the aggregation bandwidth class supported by the terminal device based on the aggregation capability information in the first signaling; or
in response to failing to analyze the first signaling, determining the aggregation bandwidth class supported by the terminal device based on the second signaling.

In an embodiment of the present disclosure, the configuration information of different network side devices is different. If the version information of the network side device is updated in time, the first signaling can be analyzed, and the aggregation bandwidth class or the aggregation capability information supported by the terminal device can be determined according to the first signaling, and the aggregation bandwidth class supported by the terminal device is determined according to the aggregation bandwidth class supported by the terminal device in the first signaling; or the aggregation bandwidth class supported by the terminal device is determined according to the aggregation capability information in the first signaling.

In a possible embodiment, the version update of the network side device is lagging behind, and the first signaling cannot be analyzed, and the newly extended aggregation bandwidth class cannot be interpreted, so the aggregation bandwidth class supported by the terminal device needs to be determined according to the second signaling.

Alternatively, the method further includes at least one of:
in response to being able to analyze the first signaling, ignoring the second signaling; or
in response to failing to analyze the first signaling, ignoring the first signaling.

In an embodiment of the present disclosure, the configuration information of different network side devices is different. If the version information of the network side device is updated in time, the first signaling can be analyzed, and the aggregation bandwidth class or the aggregation capability information supported by the terminal device can be determined according to the first signaling, and the aggregation bandwidth class supported by the terminal device is determined according to the aggregation bandwidth class supported by the terminal device in the first signaling; or the aggregation bandwidth class supported by the terminal device is determined according to the aggregation capability information in the first signaling.

In a possible embodiment, the version update of the network side device is lagging behind, and the first signaling cannot be analyzed, and the newly extended aggregation bandwidth class cannot be interpreted, so the aggregation bandwidth class supported by the terminal device needs to be determined according to the second signaling.

Alternatively, the aggregation capability information is used to respectively obtain an aggregation state in an uplink frequency band and an aggregation state in a downlink frequency band supported by the terminal device, or obtain an aggregation state in a frequency band.

In embodiments of the present disclosure, the aggregation capability information is used to report the aggregation states in the uplink frequency band and the downlink frequency band supported by the terminal device, and the aggregation state includes: contiguous, non-contiguous, contiguous and non-contiguous. The multi-carrier aggregation technology is classified into intra-band carrier aggregation and inter-band carrier aggregation. Both contiguous carrier aggregation and non-contiguous carrier aggregation can be performed in the frequency band. In order to support different types of carrier aggregation, the terminal device needs to report the aggregation states in the supported uplink and downlink frequency bands, or report the aggregation state in the supported frequency band. If the network side device can analyze the first signaling, the aggregation states in the supported uplink and downlink frequency bands supported by the terminal device or the aggregation state in the supported frequency band supported by the terminal device may be obtained based on the first signaling.

The uplink and downlink aggregation states may be uniformly configured by a supported intra-band carrier aggregation Intra-bandCA-support-v17xy signaling, that is, the uplink and downlink carrier aggregation states must be consistent.

In a possible embodiment, the network side device learns, based on the aggregation capability information, that the aggregation states in the uplink and downlink frequency bands supported by the terminal device are both contiguous, then the network side device indicates that the aggregation states in the uplink and downlink frequency bands of the terminal device are both contiguous.

In a possible embodiment, the network side device learns, based on the aggregation capability information, that the aggregation states in the uplink and downlink frequency bands supported by the terminal device are both non-contiguous, then the network side device indicates that the aggregation states in the uplink and downlink frequency bands of the terminal device are both non-contiguous.

In a possible embodiment, the network side device learns, based on the aggregation capability information, that both the aggregation states in the uplink and downlink frequency bands supported by the terminal device are contiguous or non-contiguous, then the network side device determines, based on a preconfigured determination mechanism, the aggregation states in the uplink and downlink frequency bands configured for the terminal device. If the network side device determines that the aggregation state needs to be configured as non-contiguous, then the network side device indicates that the aggregation states in the uplink and downlink frequency bands of the terminal device are both non-contiguous.

In a possible embodiment, the uplink and downlink aggregation states may be respectively configured based on a combination of the supported intra-band uplink carrier aggregation Intra-bandCAUL-support-v17xy signaling and the supported intra-band downlink carrier aggregation intra-band CADL-support-v17xy signaling, that is, the uplink and downlink carrier aggregation states can be consistent or inconsistent.

In a possible embodiment, the network side device learns, based on the aggregation capability information, that the aggregation state in the uplink frequency band supported by the terminal device is contiguous and the aggregation state in the downlink frequency band supported by the terminal device is contiguous, then the network side device indicates that the aggregation states in the uplink and downlink frequency bands of the terminal device are both contiguous.

In a possible embodiment, the network side device learns, based on the aggregation capability information, that the aggregation state in the uplink frequency band supported by the terminal device is contiguous and the aggregation state in the downlink frequency band supported by the terminal device is non-contiguous, then the network side device indicates that the aggregation state in the uplink frequency band of the terminal device is contiguous and the aggregation state in the downlink frequency band of the terminal device is non-contiguous.

In a possible embodiment, the network side device learns, based on the aggregation capability information, that the aggregation state in the uplink frequency band supported by the terminal device is non-contiguous and the aggregation state in the downlink frequency band supported by the terminal device is contiguous, then the network side device indicates that the aggregation state in the uplink frequency band of the terminal device is non-contiguous and the aggregation state in the downlink frequency band of the terminal device is contiguous.

In a possible embodiment, the network side device learns, based on the aggregation capability information, that the aggregation state in the uplink frequency band supported by the terminal device is non-contiguous and the aggregation state in the downlink frequency band supported by the terminal device is non-contiguous, then the network side device indicates that the aggregation states in the uplink and downlink frequency bands of the terminal device are both non-contiguous.

In a possible embodiment, the network side device learns, based on the aggregation capability information, that the aggregation state in the uplink frequency band supported by the terminal device is contiguous and non-contiguous and the aggregation state in the downlink frequency band supported by the terminal device is non-contiguous, then the network side device determines, based on a preconfigured determination mechanism, the aggregation state in the uplink frequency band configured for the terminal device. If the network side device determines that the aggregation state in the uplink frequency band needs to be configured as non-contiguous, then the network side device indicates that the aggregation state in the uplink frequency band of the terminal device is non-contiguous and the aggregation state in the downlink frequency band of the terminal device is non-contiguous. If the network side device determines that the aggregation state in the uplink frequency band needs to be configured as contiguous, then the network side device indicates that the aggregation states in the uplink and downlink frequency bands of the terminal device are both contiguous.

In a possible embodiment, the network side device learns, based on the aggregation capability information, that the aggregation state in the uplink frequency band supported by the terminal device is contiguous and non-contiguous and the aggregation state in the downlink frequency band supported by the terminal device is contiguous, then the network side device determines, based on a preconfigured determination mechanism, the aggregation state in the uplink frequency band configured for the terminal device. The network side device indicates that the aggregation states in the uplink and downlink frequency bands of the terminal device are both contiguous, or indicates that the aggregation state in the uplink frequency band of the terminal device is non-contiguous and the aggregation state in the downlink frequency band of the terminal device is contiguous.

In a possible embodiment, the network side device learns, based on the aggregation capability information, that the aggregation state in the uplink frequency band supported by the terminal device is contiguous and the aggregation state in the downlink frequency band supported by the terminal device is contiguous and non-contiguous, then the network side device determines, based on a preconfigured determination mechanism, the aggregation state in the downlink frequency band configured for the terminal device. The network side device indicates that the aggregation states in the uplink and downlink frequency bands of the terminal device are both contiguous, or indicates that the aggregation state in the uplink frequency band of the terminal device is contiguous and the aggregation state in the downlink frequency band of the terminal device is non-contiguous.

In a possible embodiment, the network side device learns, based on the aggregation capability information, that the aggregation state in the uplink frequency band supported by the terminal device is non-contiguous and the aggregation state in the downlink frequency band supported by the terminal device is contiguous and non-contiguous, then the network side device determines, based on a preconfigured determination mechanism, the aggregation state in the downlink frequency band configured for the terminal device. The network side device indicates that the aggregation states in the uplink and downlink frequency bands of the terminal device are both non-contiguous, or indicates that the aggregation state in the uplink frequency band of the terminal device is non-contiguous and the aggregation state in the downlink frequency band of the terminal device is contiguous.

In a possible embodiment, the network side device learns, based on the aggregation capability information, that the aggregation state in the uplink frequency band supported by the terminal device is contiguous and non-contiguous and the aggregation state in the downlink frequency band supported by the terminal device is contiguous and non-contiguous, then the network side device determines, based on a preconfigured determination mechanism, the aggregation states in the uplink and downlink frequency bands configured for the terminal device. The network side device indicates that the aggregation states in the uplink and downlink frequency bands of the terminal device are both contiguous, or indicates that the aggregation state in the uplink frequency band of the terminal device is contiguous and the aggregation state in the downlink frequency band of the terminal device is non-contiguous, or indicates that the aggregation states in the uplink and downlink frequency bands of the terminal device are both non-contiguous, or indicates that the aggregation state in the uplink frequency band of the terminal device is non-contiguous and the aggregation state in the downlink frequency band of the terminal device is contiguous.

Alternatively, the aggregation state includes at least one of:
contiguous;
non-contiguous; or
contiguous and non-contiguous.

In an embodiment of the present disclosure, the multi-carrier aggregation technology is classified into intra-band carrier aggregation and inter-band carrier aggregation. Both contiguous carrier aggregation and non-contiguous carrier aggregation can be performed in the frequency band. In order to support different types of carrier aggregation, the terminal device needs to report the aggregation states in the supported uplink and downlink frequency bands, or report the aggregation state in the supported frequency band. Contiguous carrier aggregation means that the carriers to be aggregated are close together, and non-contiguous carrier aggregation means that there is an interval between the carriers to be aggregated, which are not contiguous carriers.

Alternatively, the first signaling is a new radio (NR) carrier aggregation bandwidth class CA-BandwidthClassNR-v17xy signaling, where xy is a serial number.

In an embodiment of the present disclosure, the suffix "-v17xy" is optional and can be changed according to different Releases (for example, it may be referred to as "v18xy" in Release 18), and "xy" is a serial number.

Alternatively, the first signaling includes at least one of: an NR downlink carrier aggregation bandwidth class CA-BandwidthClassDL-NR-v17xy signaling, an NR uplink carrier aggregation bandwidth class CA-BandwidthClassUL-NR-v17xy signaling, a frequency band parameter BandParameters-v17xy signaling, a frequency band list BandList-v17xy signaling, a frequency band combination BandCombination-v17xy signaling, a frequency band combination list BandCombinationList-v17xy signaling, or a supported frequency band combination list SupportedBandCombinationList-v17xy signaling.

In an embodiment of the present disclosure, the aggregation bandwidth class supported by the terminal device may be one or more of R, S, T, and U, and obtained by the network side device based on the first signaling. The CA-BandwidthClassNR-v17xy is an upper signaling, which is contained layer by layer by the following other signaling. The other signaling includes: the CA-BandwidthClassDL-NR-v17xy signaling, used to report the aggregation bandwidth class supported by the terminal device on downlink; the CA-BandwidthClassUL-NR-v17xy signaling, used to report the aggregation bandwidth class supported by the terminal device on uplink; the BandParameters-v17xy signaling, used to carry the CA-BandwidthClassDL-NR-v17xy signaling and the CA-BandwidthClassUL-NR-v17xy signaling; the BandList-v17xy signaling, used to report a frequency band list in carrier aggregation; the BandCombination-v17xy signaling, used to report a frequency band combination list in carrier aggregation; the BandCombinationList-v17xy signaling, used to report a frequency band combination list in carrier aggregation; the SupportedBandCombinationList-v17xy signaling, used to report a frequency band combination supported by the terminal device.

In a possible implementation, the CA-BandwidthClassNR-v17xy signaling, the CA-BandwidthClassDL-NR-v17xy signaling, the CA-BandwidthClassUL-NR-v17xy signaling, the BandParameters-v17xy signaling, the BandList-v17xy signaling, the BandCombination-v17xy signaling, the BandCombinationList-v17xy signaling, and the SupportedBandCombinationList-v17xy signaling have a same identifier. For example, these IEs have the same serial number (i.e., having the consistent "xy").

In an embodiment of the present disclosure, the CA-BandwidthClassNR-v17xy is an upper signaling, and the upper signaling is contained layer by layer by the following other signaling. The other signaling includes: the NR downlink carrier aggregation bandwidth class CA-BandwidthClassDL1-NR-v17xy signaling and the NR downlink carrier aggregation bandwidth class CA-BandwidthClassDL2-NR-v17xy signaling, or the NR uplink carrier aggregation bandwidth class CA-BandwidthClassUL1-NR-v17xy signaling and the NR uplink carrier aggregation bandwidth class CA-BandwidthClassUL2-NR-v17xy signaling.

In some possible implementations, uplink and downlink parameters may be indicated through the same IE. In some other possible implementations, the uplink and downlink parameters may be indicated through the same IE, and the uplink and downlink use the same parameter. In some other possible implementations, the uplink and downlink parameters are indicated through different IEs respectively. For example, the first signaling includes an NR downlink carrier aggregation bandwidth class CA-BandwidthClassDL1-NR-v17xy signaling and an NR downlink carrier aggregation Bandwidth class CA-BandwidthClassDL2-NR-v17xy signaling, or an NR uplink carrier aggregation bandwidth class CA-BandwidthClassUL1-NR-v17xy signaling and an NR uplink carrier aggregation bandwidth class CA-BandwidthClassUL2-NR-v17xy signaling.

In an embodiment of the present disclosure, the aggregation bandwidth class supported by the terminal device may be one or more of MA, MD, ME, and MF, and obtained by the network side device based on the first signaling. The network side device obtains the downlink support of the terminal for any one or more aggregation bandwidth classes of MA, MD, ME, and MF through the CA-BandwidthClassDL1-NR-v17xy signaling and the CA-BandwidthClassDL2-NR-v17xy signaling in the supportedBandCombinationList-v17xy; or the network side device obtains the uplink support of the terminal for any one or more aggregation bandwidth classes of MA, MD, ME, and MF through the CA-BandwidthClassUL1-NR-v17xy signaling and the CA-BandwidthClassUL2-NR-v17xy signaling.

Alternatively, the first signaling further includes at least one of the frequency band parameter BandParameters-v17xy signaling, the frequency band list BandList-v17xy signaling, the frequency band combination BandCombination-v17xy signaling, the frequency band combination list BandCombinationList-v17xy signaling, the supported frequency band combination list supportedBandCombinationList-v17xy signaling.

In an embodiment of the present disclosure, the CA-BandwidthClassNR-v17xy is an upper signaling, which is contained layer by layer by the following other signaling. The other signaling includes: the BandParameters-v17xy signaling, used to report a frequency band parameter; the BandList-v17xy signaling, used to report a frequency band list; the BandCombination-v17xy signaling, used to report a frequency band combination; the BandCombinationList-v17xy signaling, used to report a frequency band combination list; the supportedBandCombinationList-v17xy signaling, used to report a supported frequency band combination list.

Alternatively, the NR downlink carrier aggregation bandwidth class CA-BandwidthClassDL1-NR-v17xy signaling, the NR downlink carrier aggregation bandwidth class CA-BandwidthClassDL2-NR-v17xy signaling, and the NR uplink carrier aggregation bandwidth class CA-BandwidthClassUL1-NR-v17xy signaling, the NR uplink carrier aggregation bandwidth class CA-BandwidthClassUL2-NR-v17xy signaling, the frequency band parameter BandParameters-v17xy signaling, the frequency band list BandList-v17xy signaling, the frequency band combination BandCombination-v17xy signaling, the frequency band combination list BandCombinationList-v17xy signaling, the supported frequency band combination list supportedBandCombinationList-v17xy signaling have a same identifier. For example, these IEs have the same serial number (i.e., having the consistent "xy").

Alternatively, the aggregation bandwidth class obtained based on the first signaling is one or more of extended aggregation bandwidth classes R, S, T, U, MA, MD, ME, and MF.

In an embodiment of the present disclosure, the aggregation bandwidth class obtained based on the first signaling is one or more of extended new aggregation bandwidth classes R, S, T, U, MA, MD, ME, and MF.

Alternatively, when the aggregation bandwidth class obtained based on the first signaling is one or more of R, S, T and U, the aggregation bandwidth class obtained based on the second signaling is F.

In an embodiment of the present disclosure, the terminal device reports the supportedBandCombinationList signaling through the second signaling, and reports the supportedBandCombinationList-v17xy signaling through the first signaling. When the network side device can analyze the first signaling, the network side device obtains the downlink support of the terminal for any aggregation bandwidth class of R, S, T, U through the CA-BandwidthClassDL-NR-v17xy in the supportedBandCombinationList-v17xy signaling or obtains the uplink support of the terminal for any aggregation bandwidth class of R, S, T and U through the CA-BandwidthClassUL-NR-v17xy in the supportedBandCombinationList-v17xy signaling. When the network side device cannot analyze the first signaling, the network side device can only obtain the downlink support of the terminal device for the aggregation bandwidth class F through the CA-BandwidthClassDL-NR in the supportedBandCombinationList signaling or obtain the uplink support of the terminal device for the aggregation bandwidth class F through the CA-BandwidthClassUL-NR in the supportedBandCombinationList signaling. The aggregation bandwidth class may include R, S, T, U, and F which all belong to the fallback group 2.

Alternatively, when the aggregation bandwidth class obtained based on the first signaling is one or more of MA, MD, ME and MF, the aggregation bandwidth class obtained based on the second signaling is one of M, F, E, D, or A.

In an embodiment of the present disclosure, the network side device needs to obtain the supportedBandCombinationList signaling through the second signaling, and obtain the supportedBandCombinationList-v17xy signaling through the first signaling. When the network side device can analyze the first signaling, the network side device obtains the downlink support of the terminal device for any aggregation bandwidth class of MA, MD, ME, and MF through the CA-BandwidthClassDL1-NR-v17xy and the CA-BandwidthClassDL2-NR-v17xy in the supportedBandCombinationList-v17xy signaling (for example, the CA-BandwidthClassDL1-NR-v17xy is used to report M and the CA-BandwidthClassDL2-NR-v17xy is used to report A, to indicate that the terminal device supports the aggregation bandwidth class MA) or reports its uplink support for any aggregation bandwidth class of MA, MD, ME, and MF through the CA-BandwidthClassUL1-NR-v17xy and the CA-BandwidthClassUL2-NR-v17xy in the supportedBandCombinationList-v17xy signaling. When the network side device cannot analyze the first signaling, the network side device can only obtain the downlink support of the terminal for the aggregation bandwidth class M or F through the CA-BandwidthClassDL-NR in the supportedBandCombinationList signaling or obtain the uplink support of the terminal for the aggregation bandwidth class M or F through the CA-BandwidthClassUL-NR in the supportedBandCombinationList signaling. The aggregation bandwidth class may include MA, MD, ME, and MF which all belong to the fallback group 2-3. The aggregation bandwidth class M belongs to the fallback group 3, and the aggregation bandwidth class F belongs to the fallback group 2. The fallback group 3 and the fallback group 2 are both subgroups of the fallback group 2-3. That is, the fallback group to which the aggregation bandwidth class M or the aggregation bandwidth class F belongs is the subgroup of the fallback group to which the aggregation bandwidth classes MA, MD, ME, and MF belong.

Alternatively, the first signaling includes: a supported intra-band carrier aggregation Intra-bandCA-support-v17xy signaling, and the Intra-bandCA-support-v17xy signaling is used to indicate the aggregation state in the uplink frequency band and the aggregation state in the downlink frequency band supported by the terminal device.

In an embodiment of the present disclosure, the terminal device simultaneously reports the supported carrier aggregation states on uplink and downlink through the first signaling, that is, the uplink and downlink carrier aggregation states must be consistent, as shown in Table 4. In a possible embodiment, the state indicated by the IE Intra-bandCA-support-v17xy is contiguous, then the supported carrier aggregation states on uplink and downlink obtained by the network side device are both contiguous. The network side device may configure the uplink and downlink of the terminal device to be a contiguous carrier aggregation state.

In a possible embodiment, the state indicated by the IE Intra-bandCA-support-v17xy is non-contiguous, then the supported carrier aggregation states on uplink and downlink obtained by the network side device are both non-contiguous. The network side device may configure the uplink and downlink of the terminal device to be a non-contiguous carrier aggregation state.

In a possible embodiment, the state indicated by the IE Intra-bandCA-support-v17xy is both, then the supported carrier aggregation states on uplink and downlink obtained by the network side device may be contiguous, or may be non-contiguous. The network side device determines, based on a preconfigured determination mechanism, the aggregation states in the uplink and downlink frequency bands configured for the terminal device. If the network side device determines that the aggregation state needs to be configured as contiguous, then the network side device indicates that the aggregation states in the uplink and downlink frequency bands of the terminal device are both contiguous. If the network side device determines that the aggregation state needs to be configured as non-contiguous, then the network side device indicates that the aggregation states in the uplink and downlink frequency bands of the terminal device are both non-contiguous.

Alternatively, the first signaling includes: a combination of a supported intra-band uplink carrier aggregation Intra-bandCAUL-support-v17xy signaling and a supported intra-band downlink carrier aggregation Intra-bandCADL-support-v17xy signaling. The Intra-bandCAUL-support-v17xy signaling and the Intra-bandCADL-support-v17xy signaling are respectively used to indicate an uplink carrier aggregation state and a downlink carrier aggregation state.

In an embodiment of the present disclosure, the CA-BandwidthClassNR-v17xy is an upper signaling, which is contained layer by layer by the following other signaling. The other signaling includes: the combination of the supported intra-band uplink carrier aggregation Intra-bandCAUL-support-v17xy signaling and the supported intra-band downlink carrier aggregation Intra-bandCADL-support-v17xy signaling. The Intra-bandCAUL-support-v17xy signaling and the Intra-bandCADL-support-v17xy signaling are respectively used to indicate an uplink carrier aggregation state and a downlink carrier aggregation state.

In an embodiment of the present disclosure, the network side device respectively obtains the supported carrier aggregation states of the uplink and downlink through the first signaling, that is, the uplink and downlink carrier aggregation states may not be consistent, as shown in Table 5. In a possible embodiment, the state indicated by the IE Intra-bandCAUL-support-v17xy is contiguous, and the state indicated by the IE Intra-bandCADL-support-v17xy signaling is contiguous, then the supported carrier aggregation state on uplink obtained by the network side device is contiguous, and the supported carrier aggregation state on downlink obtained by the network side device is contiguous. The network side device may configure the uplink and downlink of the terminal device to be a contiguous carrier aggregation state.

In a possible embodiment, the state indicated by the IE Intra-bandCAUL-support-v17xy is contiguous, and the state indicated by the IE Intra-bandCADL-support-v17xy signaling is non-contiguous, then the supported carrier aggregation state on uplink obtained by the network side device is contiguous, and the supported carrier aggregation state on downlink obtained by the network side device is non-contiguous. The network side device may configure the uplink of the terminal device to be a contiguous carrier aggregation state, and configure the downlink of the terminal device to be a non-contiguous carrier aggregation state.

In a possible embodiment, the state indicated by the IE Intra-bandCAUL-support-v17xy is non-contiguous, and the state indicated by the IE Intra-bandCADL-support-v17xy is contiguous, then the supported carrier aggregation state on uplink obtained by the network side device is non-contiguous, and the supported carrier aggregation state on downlink obtained by the network side device is contiguous. The network side device may configure the uplink of the terminal device to be a non-contiguous carrier aggregation state, and configure the downlink of the terminal device to be a contiguous carrier aggregation state.

In a possible embodiment, the state indicated by the IE Intra-bandCAUL-support-v17xy is non-contiguous, and the state indicated by the IE Intra-bandCADL-support-v17xy is non-contiguous, then the supported carrier aggregation state on uplink obtained by the network side device is non-contiguous, and the supported carrier aggregation state on downlink obtained by the network side device is non-contiguous. The network side device may configure the uplink and downlink of the terminal device to be a non-contiguous carrier aggregation state.

In a possible embodiment, the state indicated by the IE Intra-bandCAUL-support-v17xy is both, and the state indicated by the IE Intra-bandCADL-support-v17xy is contiguous, then the supported carrier aggregation state on uplink obtained by the network side device is contiguous and non-contiguous, and the supported carrier aggregation state on downlink obtained by the network side device is contiguous. The network side device may configure the uplink and downlink of the terminal device to be a contiguous carrier aggregation state, or the network side device may configure the uplink of the terminal device to be a non-contiguous carrier aggregation state and configure the downlink of the terminal device to be a contiguous carrier aggregation state.

In a possible embodiment, the state indicated by the IE Intra-bandCAUL-support-v17xy is both, and the state indicated by the IE Intra-bandCADL-support-v17xy is non-contiguous, then the supported carrier aggregation state on uplink obtained by the network side device is contiguous and non-contiguous, and the supported carrier aggregation state on downlink obtained by the network side device is non-contiguous. The network side device may configure the uplink and downlink of the terminal device to be a non-contiguous carrier aggregation state, or the network side device may configure the uplink of the terminal device to be a contiguous carrier aggregation state and configure the downlink of the terminal device to be a non-contiguous carrier aggregation state.

In a possible embodiment, the state indicated by the IE Intra-bandCAUL-support-v17xy is contiguous, and the state indicated by the IE Intra-bandCADL-support-v17xy is both, then the supported carrier aggregation state on uplink obtained by the network side device is contiguous, and the supported carrier aggregation state on downlink obtained by the network side device is contiguous and non-contiguous. The network side device may configure the uplink and downlink of the terminal device to be a contiguous carrier aggregation state, or the network side device may configure the uplink of the terminal device to be a contiguous carrier aggregation state and configure the downlink of the terminal device to be a non-contiguous carrier aggregation state.

In a possible embodiment, the state indicated by the IE Intra-bandCAUL-support-v17xy is non-contiguous, and the state indicated by the IE Intra-bandCADL-support-v17xy is both, then the supported carrier aggregation state on uplink obtained by the network side device is non-contiguous, and the supported carrier aggregation state on downlink obtained by the network side device is contiguous and non-contiguous. The network side device may configure the uplink and downlink of the terminal device to be a non-contiguous carrier aggregation state, or the network side device may configure the uplink of the terminal device to be a non-contiguous carrier aggregation state and configure the downlink of the terminal device to be a contiguous carrier aggregation state.

In a possible embodiment, the state indicated by the IE Intra-bandCAUL-support-v17xy is both, and the state indicated by the IE Intra-bandCADL-support-v17xy is both, then the supported carrier aggregation state on uplink obtained by the network side device is contiguous and non-contiguous, and the supported carrier aggregation state on downlink obtained by the network side device is contiguous and non-contiguous. The network side device may configure the uplink and downlink of the terminal device to be a non-contiguous carrier aggregation state, or network side device may configure the uplink and downlink of the terminal device to be a contiguous carrier aggregation state, or the network side device may configure the uplink of the terminal device to be a contiguous carrier aggregation state and configure the downlink of the terminal device to be a non-contiguous carrier aggregation state, or the network side device may configure the uplink of the terminal device to be a non-contiguous carrier aggregation state and configure the downlink of the terminal device to be a contiguous carrier aggregation state.

Alternatively, the first signaling further includes at least one of: a frequency band parameter BandParameters-v17xy signaling, a frequency band list BandList-v17xy signaling, a frequency band combination BandCombination-v17xy signaling, a frequency band combination list BandCombinationList-v17xy signaling, or a supported frequency band combination list SupportedBandCombinationList-v17xy signaling.

In an embodiment of the present disclosure, the CA-BandwidthClassNR-v17xy is an upper signaling, which is contained layer by layer by the following other signaling. The other signaling includes: the BandParameters-v17xy signaling, used to report a frequency band parameter; the BandList-v17xy signaling, used to report a frequency band list in carrier aggregation; the BandCombination-v17xy signaling, used to report a frequency band combination in carrier aggregation; the BandCombinationList-v17xy signaling, used to report a frequency band combination list in carrier aggregation; the SupportedBandCombinationList-v17xy signaling, used to report a frequency band combination supported by the terminal device.

Alternatively, the supported intra-band carrier aggregation Intra-bandCA-support signaling, the frequency band parameter BandParameters-v17xy signaling, the frequency band list BandList-v17xy signaling, and the frequency band combination BandCombination-v17xy signaling, the frequency band combination list BandCombinationList-v17xy signaling, and the supported frequency band combination list SupportedBandCombinationList-v17xy signaling have a same identifier. For example, these IEs have the same serial number (i.e., having the consistent "xy").

Alternatively, the supported intra-band uplink carrier aggregation Intra-bandCAUL-support signaling, the supported intra-band downlink carrier aggregation Intra-bandCADL-support signaling, and the frequency band parameter BandParameters-v17xy signaling, the frequency band list BandList-v17xy signaling, the frequency band combination BandCombination-v17xy signaling, the frequency band combination list BandCombinationList-v17xy signaling, and the supported frequency band combination list SupportedBandCombinationList-v17xy have a same identifier. For example, these IEs have the same serial number (i.e., having the consistent "xy").

In the above embodiments of the disclosure, the methods according to the embodiments of the disclosure are described from the perspectives of the network device and the terminal device, respectively. In order to realize each of the functions in the methods according to the above embodiments of the disclosure, the network device and the terminal device may include a hardware structure, a software module, and realize each of the above functions in the form of hardware structure, software module, or a combination of hardware structure and software module. A certain function of the above functions may be performed in the form of hardware structure, software module, or a combination of hardware structure and software module.

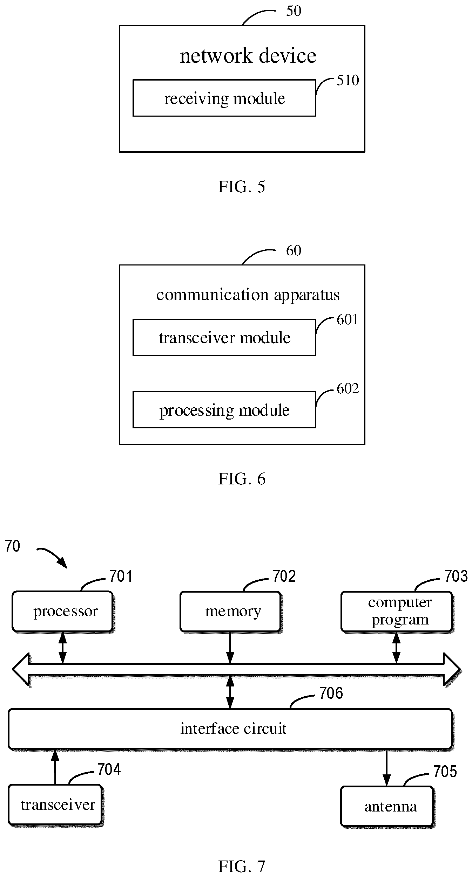

Referring to FIG. 6, FIG. 6 is a block diagram of a communication apparatus 60 according to an embodiment of the present disclosure. The communication apparatus 60 as shown in FIG. 6 may include a transceiver module 601 and a processing module 602. The transceiver module 601 may include a sending module and/or a receiving module. The sending module is configured to implement a sending function. The receiving module is configured to implement a receiving function. The transceiver module 601 may implement the sending function and/or the receiving function.

The communication apparatus 60 may be a terminal device (such as the terminal device in the foregoing method embodiments), or may be an apparatus in the terminal device, or may be an apparatus capable of being used in combination with the terminal device. Alternatively, the communication apparatus 60 may be a network device, or may be an apparatus in the network device, or may be an apparatus capable of being used in combination with the network device.

The communication apparatus 60 is the terminal device, as illustrated in FIG. 4, the terminal device 40 includes:
a reporting module 410, configured to report an aggregation bandwidth class or aggregation capability information supported by the terminal device to a network side device through a first signaling, and report the aggregation bandwidth class supported by the terminal device to the network side device through a second signaling; in which the aggregation bandwidth class reported through the second signaling is a fallback aggregation bandwidth class of the aggregation bandwidth class reported through the first signaling.

The communication apparatus 60 is the network device, as illustrated in FIG. 5, the network device 50 includes:
a receiving module 510, configured to receive a first signaling and a second signaling sent by a terminal device; in which the first signaling is configured to indicate an aggregation bandwidth class or aggregation capability information supported by the terminal device, and the second signaling is configured to indicate the aggregation bandwidth class supported by the terminal device, in which the aggregation bandwidth class reported through the second signaling is a fallback aggregation bandwidth class of the aggregation bandwidth class reported through the first signaling.

Referring to FIG. 7, FIG. 7 is a block diagram of another communication apparatus 70 provided by an embodiment of the disclosure. The communication apparatus 70 may be a network device or a terminal device (such as the terminal device in the foregoing method embodiments), or may be a chip, a chip system or a processor that supports the network device to realize the above-described methods, or may be a chip, a chip system or a processor that supports the terminal device to realize the above-described methods. The apparatus may be used to realize the methods described in the above method embodiments with reference to the description of the above-described method embodiments.

The communication device 70 may include one or more processors 701. The processor 701 may be a general purpose processor or a dedicated processor, such as, a baseband processor and a central processor. The baseband processor is used for processing communication protocols and communication data. The central processor is used for controlling the communication apparatus (e.g., a base station, a baseband chip, a terminal device, a terminal device chip, a DU, or a CU), executing computer programs, and processing data of the computer programs.

Optionally, the communication apparatus 70 may include one or more memories 702 on which computer programs 703 may be stored. The processor 701 executes the computer programs 703 to cause the communication apparatus 70 to perform the methods described in the above method embodiments. Alternatively, the memory 702 may also store data. The communication apparatus 70 and the memory 702 may be provided separately or may be integrated together.

Optionally, the communication apparatus 70 may also include a transceiver 704 and an antenna 705. The transceiver 704 may be referred to as a transceiver unit, a transceiver machine, or a transceiver circuit, for realizing a transceiver function. The transceiver 704 may include a receiver and a transmitter. The receiver may be referred to as a receiving machine or a receiving circuit, for realizing the receiving function. The transmitter may be referred to as a transmitter machine or a transmitting circuit, for realizing the transmitting function.

Optionally, the communication apparatus 70 may also include one or more interface circuits 706. The interface circuits 706 are used to receive code instructions and transmit them to the processor 701. The processor 701 runs the code instructions to cause the communication apparatus 70 to perform the method described in the method embodiments.

The communication apparatus 70 is the terminal device (such as the terminal device in the foregoing method embodiments): the processor 701 is configured to perform step of reporting an aggregation bandwidth class or aggregation capability information supported by the terminal device to a network side device through a first signaling, and reporting the aggregation bandwidth class supported by the terminal device to the network side device through a second signaling.

The communication apparatus 70 is the network device, and the transceiver 704 is configured to perform step S201 in FIG. 2.

In an implementation, the processor 701 may include a transceiver for implementing the receiving and sending functions. The transceiver may be, for example, a transceiver circuit, an interface, or an interface circuit. The transceiver circuit, the interface, or the interface circuit for implementing the receiving and sending functions may be separated or may be integrated together. The transceiver circuit, the interface, or the interface circuit described above may be used for reading and writing code/data, or may be used for signal transmission or delivery.

In an implementation, the processor 701 may store a computer program 703. When the computer program 703 runs on the processor 701, the communication apparatus 70 is caused to perform the methods described in the method embodiments above. The computer program 703 may be solidified in the processor 701, and in such case the processor 701 may be implemented by hardware.

In an implementation, the communication apparatus 70 may include circuits. The circuits may implement the sending, receiving or communicating function in the preceding method embodiments. The processor and the transceiver described in this disclosure may be implemented on integrated circuits (ICs), analog ICs, radio frequency integrated circuits (RFICs), mixed signal ICs, application specific integrated circuits (ASICs), printed circuit boards (PCBs), and electronic devices. The processor and the transceiver can also be produced using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon-germanium (SiGe), gallium arsenide (GaAs) and so on.

The communication apparatus in the description of the above embodiments may be a network device or a terminal device (such as the terminal device in the foregoing method embodiments), but the scope of the communication apparatus described in the disclosure is not limited thereto, and the structure of the communication apparatus may not be limited by FIG. 7. The communication apparatus may be a stand-alone device or may be part of a larger device. For example, the described communication apparatus may be:
(1) a stand-alone IC, a chip, a chip system or a subsystem;
(2) a collection of ICs including one or more ICs, optionally, the collection of ICs may also include storage components for storing data and computer programs;
(3) an ASIC, such as a modem;
(4) a module that can be embedded within other devices;
(5) a receiver, a terminal device, a smart terminal device, a cellular phone, a wireless device, a handheld machine, a mobile unit, an in-vehicle device, a network device, a cloud device, an artificial intelligence device, and the like; and
(6) others.

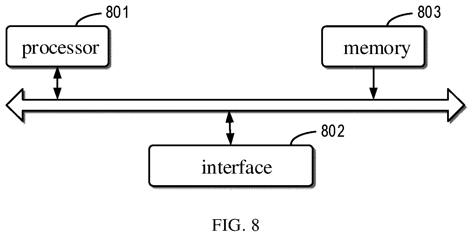

The case where the communication apparatus may be a chip or a chip system is described with reference to the schematic structure of the chip shown in FIG. 8. The chip shown in FIG. 8 includes a processor 801 and an interface 802. There may be one or more processors 801, and there may be multiple interfaces 802.

Alternatively, the chip further includes a memory 803, and the memory 803 is configured to store necessary computer programs and data.

It is understood by those skilled in the art that various illustrative logical blocks and steps listed in the embodiments of the disclosure may be implemented by electronic hardware, computer software, or a combination of both. Whether such function is implemented by hardware or software depends on the particular application and the design requirements of the entire system. Those skilled in the art may, for each particular application, use various methods to implement the described function, but such implementation should not be understood as beyond the scope of protection of the embodiments of the disclosure.

The embodiments of the present disclosure further provide a system for reporting a multi-carrier aggregation capability, in which the system includes a communication apparatus acting as a terminal device (such as the terminal device in the foregoing method embodiments) in the foregoing embodiment of FIG. 5, or the system include a communication apparatus acting as a terminal device (such as the terminal device in the foregoing method embodiments) and a communication apparatus acting as a network device in the foregoing embodiment of FIG. 7.

The present disclosure further provides a readable storage medium having stored thereon instructions that, when executed by a computer, implement the functions of any of the foregoing method embodiments.

The present disclosure further provides a computer program product. When the computer program product is executed by a computer, the function of any of the method embodiments described above is implemented.

The above embodiments may be implemented in whole or in part by software, hardware, firmware, or any combination thereof. When implemented using software, the above embodiments may be implemented, in whole or in part, in the form of a computer program product. The computer program product includes one or more computer programs. When loading and executing the computer program on the computer, all or part of processes or functions described in the embodiments of the disclosure is implemented. The computer may be a general-purpose computer, a dedicated computer, a computer network, or other programmable devices. The computer program may be stored in a computer-readable storage medium or transmitted from one computer-readable storage medium to another computer-readable storage medium. For example, the computer program may be transmitted from one web site, computer, server, or data center to another web site, computer, server, or data center, in a wired manner (e.g., using coaxial cables, fiber optics, or digital subscriber lines (DSLs) or wireless manner (e.g., using infrared wave, wireless wave, or microwave). The computer-readable storage medium may be any usable medium to which the computer is capable to access or a data storage device such as a server integrated by one or more usable mediums and a data center. The usable medium may be a magnetic medium (e.g., a floppy disk, a hard disk, and a tape), an optical medium (e.g., a high-density digital video disc (DVD)), or a semiconductor medium (e.g., a solid state disk (SSD)).

Those skilled in the art can understand that the first, second, and other various numerical numbers involved in the disclosure are only described for the convenience of differentiation, and are not used to limit the scope of the embodiments of the disclosure, or used to indicate the order of precedence.

The term "at least one" in the disclosure may also be described as one or more, and the term "multiple" may be two, three, four, or more, which is not limited in the disclosure. In the embodiments of the disclosure, for a type of technical features, "first", "second", and "third", and "A", "B", "C" and "D" are used to distinguish different technical features of the type, the technical features described using the "first", "second", and "third", and "A", "B", "C" and "D" do not indicate any order of precedence or magnitude.

The correspondences shown in the tables in this disclosure may be configured or may be predefined. The values of information in the tables are merely examples and may be configured to other values, which are not limited by the disclosure. In configuring the correspondence between the information and the parameter, it is not necessarily required that all the correspondences illustrated in the tables must be configured. For example, the correspondences illustrated in certain rows in the tables in this disclosure may not be configured. For another example, the above tables may be adjusted appropriately, such as splitting, combining, and the like. The names of the parameters shown in the titles of the above tables may be other names that can be understood by the communication apparatus, and the values or representations of the parameters may be other values or representations that can be understood by the communication apparatus. Each of the above tables may also be implemented with other data structures, such as, arrays, queues, containers, stacks, linear tables, pointers, chained lists, trees, graphs, structures, classes, heaps, and Hash tables.

The term "predefine" in this disclosure may be understood as define, define in advance, store, pre-store, pre-negotiate, pre-configure, solidify, or pre-fire.

Those skilled in the art may realize that the units and algorithmic steps of the various examples described in combination with the embodiments disclosed herein are capable of being implemented in the form of electronic hardware, or a combination of computer software and electronic hardware. Whether these functions are performed in the form of hardware or software depends on the specific application and design constraints of the technical solution. Those skilled in the art may use different methods to implement the described functions for each particular application, but such implementations should not be considered as beyond the scope of the disclosure.

It is clearly understood by those skilled in the field to which it belongs that, for the convenience and brevity of description, the specific working processes of the systems, apparatuses, and units described above can be referred to the corresponding processes in the preceding method embodiments, and will not be repeated herein.

The above are only specific implementations of the disclosure, but the scope of protection of the disclosure is not limited thereto. Those skilled in the art familiar to this technical field can easily think of changes or substitutions in the technical scope disclosed by the disclosure, which shall be covered by the scope of protection of the disclosure. Therefore, the scope of protection of the disclosure shall be governed by the scope of protection of the appended claims.

## Claims

1. A method for reporting a multi-carrier aggregation capability, performed by a terminal device, and the method comprising:
reporting an aggregation bandwidth class or aggregation capability information supported by the terminal device to a network side device through a first signaling, and reporting the aggregation bandwidth class supported by the terminal device to the network side device through a second signaling; wherein the aggregation bandwidth class reported through the second signaling is a fallback aggregation bandwidth class of the aggregation bandwidth class reported through the first signaling.

2. The method of claim 1, wherein,
the aggregation bandwidth class reported through the first signaling and the aggregation bandwidth class reported through the second signaling belong to a same fallback group; or
the aggregation bandwidth class reported through the second signaling and the aggregation bandwidth class reported through the first signaling are located in different fallback groups; or
a fallback group to which the aggregation bandwidth class reported through the second signaling belongs is a subgroup of a fallback group to which the aggregation bandwidth class reported through the first signaling belongs.

3. The method of claim 1, wherein the aggregation capability information is used to respectively report an aggregation state in an uplink frequency band and an aggregation state in a downlink frequency band supported by the terminal device, or report an aggregation state in a frequency band.

4. The method of claim 3, wherein the aggregation state comprises at least one of:
contiguous;
non-contiguous; or
contiguous and non-contiguous.

5. The method of claim 2, wherein the first signaling is a new radio (NR) carrier aggregation bandwidth class CA-BandwidthClassNR-v17xy signaling, where xy is a serial number.

6. The method of claim 5, wherein the first signaling comprises at least one of: an NR downlink carrier aggregation bandwidth class CA-BandwidthClassDL-NR-v17xy signaling, an NR uplink carrier aggregation bandwidth class CA-BandwidthClassUL-NR-v17xy signaling, a frequency band parameter BandParameters-v17xy signaling, a frequency band list BandList-v17xy signaling, a frequency band combination BandCombination-v17xy signaling, a frequency band combination list BandCombinationList-v17xy signaling, or a supported frequency band combination list SupportedBandCombinationList-v17xy signaling.

7. The method of claim 6, wherein the CA-BandwidthClassNR-v17xy signaling, the CA-BandwidthClassDL-NR-v17xy signaling, the CA-BandwidthClassUL-NR-v17xy signaling, the BandParameters-v17xy signaling, the BandList-v17xy signaling, the BandCombination-v17xy signaling, the BandCombinationList-v17xy signaling, and the SupportedBandCombinationList-v17xy signaling have a same identifier.

8. The method of claim 5, wherein the first signaling further comprises: an NR downlink carrier aggregation bandwidth class CA-BandwidthClassDL1-NR-v17xy signaling and an NR downlink carrier aggregation bandwidth class CA-BandwidthClassDL2-NR-v17xy signaling, or an NR uplink carrier aggregation bandwidth class CA-BandwidthClassUL1-NR-v17xy signaling and an NR uplink carrier aggregation bandwidth class CA-BandwidthClassUL2-NR-v17xy signaling.

9. The method of claim 8, wherein the first signaling further comprises at least one of: a frequency band parameter BandParameters-v17xy signaling, a frequency band list BandList-v17xy signaling, a frequency band combination BandCombination-v17xy signaling, a frequency band combination list BandCombinationList-v17xy signaling, or a supported frequency band combination list supportedBandCombinationList-v17xy signaling.

10. The method of claim 9, wherein the NR downlink carrier aggregation bandwidth class CA-BandwidthClassDL1-NR-v17xy signaling, the NR downlink carrier aggregation bandwidth class CA-BandwidthClassDL2-NR-v17xy signaling, and the NR uplink carrier aggregation bandwidth class CA-BandwidthClassUL1-NR-v17xy signaling, the NR uplink carrier aggregation bandwidth class CA-BandwidthClassUL2-NR-v17xy signaling, the frequency band parameter BandParameters-v17xy signaling, the frequency band list BandList-v17xy signaling, the frequency band combination BandCombination-v17xy signaling, the frequency band combination list BandCombinationList-v17xy signaling, the supported frequency band combination list supportedBandCombinationList-v17xy signaling have a same identifier.

11. The method of claim 1, wherein the aggregation bandwidth class reported through the first signaling is one or more of extended aggregation bandwidth classes R, S, T, U, MA, MD, ME, and MF.

12. The method of claim 11, wherein when the aggregation bandwidth class reported through the first signaling is one or more of R, S, T and U, the aggregation bandwidth class reported through the second signaling is F.

13. The method of claim 11, wherein when the aggregation bandwidth class reported through the first signaling is one or more of MA, MD, ME and MF, the aggregation bandwidth class reported through the second signaling is one of M, F, E, D, or A.

14. The method of claim 3, wherein the first signaling comprises: a supported intra-band carrier aggregation Intra-bandCA-support-v17xy signaling, and the Intra-bandCA-support-v17xy signaling is used to indicate the aggregation state in the uplink frequency band and the aggregation state in the downlink frequency band supported by the terminal device.

15. The method of claim 3 or 14, wherein the first signaling comprises: a combination of a supported intra-band uplink carrier aggregation Intra-bandCAUL-support-v17xy signaling and a supported intra-band downlink carrier aggregation Intra-bandCADL-support-v17xy signaling, wherein the Intra-bandCAUL-support-v17xy signaling and the Intra-bandCADL-support-v17xy signaling are respectively used to indicate an uplink carrier aggregation state and a downlink carrier aggregation state.

16. The method of claim 14 or 15, wherein the first signaling further comprises at least one of: a frequency band parameter BandParameters-v17xy signaling, a frequency band list BandList-v17xy signaling, a frequency band combination BandCombination-v17xy signaling, a frequency band combination list BandCombinationList-v17xy signaling, or a supported frequency band combination list SupportedBandCombinationList-v17xy signaling.

17. The method of claim 16, wherein the supported intra-band carrier aggregation Intra-bandCA-support signaling, the frequency band parameter BandParameters-v17xy signaling, the frequency band list BandList-v17xy signaling, and the frequency band combination BandCombination-v17xy signaling, the frequency band combination list BandCombinationList-v17xy signaling, and the supported frequency band combination list SupportedBandCombinationList-v17xy signaling have a same identifier.

18. The method of claim 16, wherein the supported intra-band uplink carrier aggregation Intra-bandCAUL-support signaling, the supported intra-band downlink carrier aggregation Intra-bandCADL-support signaling, and the frequency band parameter BandParameters-v17xy signaling, the frequency band list BandList-v17xy signaling, the frequency band combination BandCombination-v17xy signaling, the frequency band combination list BandCombinationList-v17xy signaling, and the supported frequency band combination list SupportedBandCombinationList-v17xy have a same identifier.

19. A method for acquiring a multi-carrier aggregation capability, performed by a network side device, and the method comprising:
receiving a first signaling and a second signaling sent by a terminal device; wherein the first signaling is configured to indicate an aggregation bandwidth class or aggregation capability information supported by the terminal device, and the second signaling is configured to indicate the aggregation bandwidth class supported by the terminal device, wherein the aggregation bandwidth class reported through the second signaling is a fallback aggregation bandwidth class of the aggregation bandwidth class reported through the first signaling.

20. The method of claim 19, wherein,
the aggregation bandwidth class reported through the first signaling and the aggregation bandwidth class reported through the second signaling belong to a same fallback group; or
the aggregation bandwidth class reported through the second signaling and the aggregation bandwidth class reported through the first signaling are located in different fallback groups; or
a fallback group to which the aggregation bandwidth class reported through the second signaling belongs is a subgroup of a fallback group to which the aggregation bandwidth class reported through the first signaling belongs.

21. The method of claim 19, wherein the method comprises: analyzing the first signaling, and determining the aggregation bandwidth class supported by the terminal device based on an analysis result.

22. The method of claim 21, wherein determining the aggregation bandwidth class supported by the terminal device based on the analysis result comprises at least one of:
in response to being able to analyze the first signaling, determining the aggregation bandwidth class or the aggregation capability information supported by the terminal device based on the first signaling, and determining the aggregation bandwidth class supported by the terminal device based on the aggregation bandwidth class supported by the terminal device in the first signaling or determining the aggregation bandwidth class supported by the terminal device based on the aggregation capability information in the first signaling; or
in response to failing to analyze the first signaling, determining the aggregation bandwidth class supported by the terminal device based on the second signaling.

23. The method of claim 21, comprising at least one of:
in response to being able to analyze the first signaling, ignoring the second signaling; or
in response to failing to analyze the first signaling, ignoring the first signaling.

24. The method of claim 20, wherein the aggregation capability information is used to respectively obtain an aggregation state in an uplink frequency band and an aggregation state in a downlink frequency band supported by the terminal device, or obtain an aggregation state in a frequency band.

25. The method of claim 24, wherein the aggregation state comprises at least one of:
contiguous;
non-contiguous; or
contiguous and non-contiguous.

26. The method of claim 19, wherein the first signaling is a new radio (NR) carrier aggregation bandwidth class CA-BandwidthClassNR-v17xy signaling, where xy is a serial number.

27. The method of claim 26, wherein the first signaling comprises at least one of: an NR downlink carrier aggregation bandwidth class CA-BandwidthClassDL-NR-v17xy signaling, an NR uplink carrier aggregation bandwidth class CA-BandwidthClassUL-NR-v17xy signaling, a frequency band parameter BandParameters-v17xy signaling, a frequency band list BandList-v17xy signaling, a frequency band combination BandCombination-v17xy signaling, a frequency band combination list BandCombinationList-v17xy signaling, or a supported frequency band combination list SupportedBandCombinationList-v17xy signaling.

28. The method of claim 27, wherein the CA-BandwidthClassNR-v17xy signaling, the CA-BandwidthClassDL-NR-v17xy signaling, the CA-BandwidthClassUL-NR-v17xy signaling, the BandParameters-v17xy signaling, the BandList-v17xy signaling, the BandCombination-v17xy signaling, the BandCombinationList-v17xy signaling, and the SupportedBandCombinationList-v17xy signaling have a same identifier.

29. The method of claim 26, wherein the first signaling further comprises: an NR downlink carrier aggregation bandwidth class CA-BandwidthClassDL1-NR-v17xy signaling and an NR downlink carrier aggregation bandwidth class CA-BandwidthClassDL2-NR-v17xy signaling, or an NR uplink carrier aggregation bandwidth class CA-BandwidthClassUL1-NR-v17xy signaling and an NR uplink carrier aggregation bandwidth class CA-BandwidthClassUL2-NR-v17xy signaling.

30. The method of claim 29, wherein the first signaling further comprises at least one of: a frequency band parameter BandParameters-v17xy signaling, a frequency band list BandList-v17xy signaling, a frequency band combination BandCombination-v17xy signaling, a frequency band combination list BandCombinationList-v17xy signaling, or a supported frequency band combination list supportedBandCombinationList-v17xy signaling.

31. The method of claim 30, wherein the NR downlink carrier aggregation bandwidth class CA-BandwidthClassDL1-NR-v17xy signaling, the NR downlink carrier aggregation bandwidth class CA-BandwidthClassDL2-NR-v17xy signaling, and the NR uplink carrier aggregation bandwidth class CA-BandwidthClassUL1-NR-v17xy signaling, the NR uplink carrier aggregation bandwidth class CA-BandwidthClassUL2-NR-v17xy signaling, the frequency band parameter BandParameters-v17xy signaling, the frequency band list BandList-v17xy signaling, the frequency band combination BandCombination-v17xy Signaling, the frequency band combination list BandCombinationList-v17xy signaling, the supported frequency band combination list supportedBandCombinationList-v17xy signaling have a same identifier.

32. The method of claim 19, wherein the aggregation bandwidth class obtained based on the first signaling is one or more of extended aggregation bandwidth classes R, S, T, U, MA, MD, ME, and MF.

33. The method of claim 32, wherein when the aggregation bandwidth class obtained based on the first signaling is one or more of R, S, T and U, the aggregation bandwidth class obtained based on the second signaling is F.

34. The method of claim 32, wherein when the aggregation bandwidth class obtained based on the first signaling is one or more of MA, MD, ME and MF, the aggregation bandwidth class obtained based on the second signaling is one of M, F, E, D, or A.

35. The method of claim 24, wherein the first signaling comprises: a supported intra-band carrier aggregation Intra-bandCA-support-v17xy signaling, and the Intra-bandCA-support-v17xy signaling is used to indicate the aggregation state in the uplink frequency band and the aggregation state in the downlink frequency band supported by the terminal device.

36. The method of claim 24 or 35, wherein the first signaling comprises: a combination of a supported intra-band uplink carrier aggregation Intra-bandCAUL-support-v17xy signaling and a supported intra-band downlink carrier aggregation Intra-bandCADL-support-v17xy signaling, wherein the Intra-bandCAUL-support-v17xy signaling and the Intra-bandCADL-support-v17xy signaling are respectively used to indicate an uplink carrier aggregation state and a downlink carrier aggregation state.

37. The method of claim 35 or 36, wherein the first signaling further comprises at least one of: a frequency band parameter BandParameters-v17xy signaling, a frequency band list BandList-v17xy signaling, a frequency band combination BandCombination-v17xy signaling, a frequency band combination list BandCombinationList-v17xy signaling, or a supported frequency band combination list SupportedBandCombinationList-v17xy signaling.

38. The method of claim 37, wherein the supported intra-band carrier aggregation Intra-bandCA-support signaling, the frequency band parameter BandParameters-v17xy signaling, the frequency band list BandList-v17xy signaling, and the frequency band combination BandCombination-v17xy signaling, the frequency band combination list BandCombinationList-v17xy signaling, and the supported frequency band combination list SupportedBandCombinationList-v17xy signaling have a same identifier.

39. The method of claim 37, wherein the supported intra-band uplink carrier aggregation Intra-bandCAUL-support signaling, the supported intra-band downlink carrier aggregation Intra-bandCADL-support signaling, and the frequency band parameter BandParameters-v17xy signaling, the frequency band list BandList-v17xy signaling, the frequency band combination BandCombination-v17xy signaling, the frequency band combination list BandCombinationList-v17xy signaling, and the supported frequency band combination list SupportedBandCombinationList-v17xy have a same identifier.

40. An apparatus for reporting a multi-carrier aggregation capability, applied to a terminal device, and the apparatus comprising:
a reporting module, configured to report an aggregation bandwidth class or aggregation capability information supported by the terminal device to a network side device through a first signaling, and report the aggregation bandwidth class supported by the terminal device to the network side device through a second signaling; wherein the aggregation bandwidth class reported through the second signaling is a fallback aggregation bandwidth class of the aggregation bandwidth class reported through the first signaling.

41. An apparatus for acquiring a multi-carrier aggregation capability, applied to a network side device, and the apparatus comprising:
a receiving module, configured to receive a first signaling and a second signaling sent by a terminal device; wherein the first signaling is configured to indicate an aggregation bandwidth class or aggregation capability information supported by the terminal device, and the second signaling is configured to indicate the aggregation bandwidth class supported by the terminal device, wherein the aggregation bandwidth class reported through the second signaling is a fallback aggregation bandwidth class of the aggregation bandwidth class reported through the first signaling.

42. A communication apparatus, comprising:
a processor;
a memory for storing a computer program; wherein
the computer program is executed by the processor, to cause the processor to perform the method of any one of claims 1-18.

43. A communication apparatus, comprising:
a processor;
a memory for storing a computer program; wherein
the computer program is executed by the processor, to cause the processor to perform the method of any one of claims 19-39.

44. A computer-readable storage medium for storing instructions, wherein when the instructions are executed, the steps in the method of any one of claims 1-18 are performed.

45. A computer-readable storage medium for storing instructions, wherein when the instructions are executed, the steps in the method of any one of claims 19-39 are performed.
